# EUROPEAN PATENT APPLICATION

(11) **EP 4 435 721 A1**
(43) Date of publication of application: **25.09.2024**
(21) Application number: 22895495.4
(22) Date of filing: 09.11.2022
(51) Int. Cl.: G06T 7/73

(54) **INFORMATION PROCESSING DEVICE, INFORMATION PROCESSING METHOD, AND PROGRAM**

(30) Priority: 18.11.2021 JP 2021188076
(71) Applicant: Sony Group Corporation, Tokyo 108-0075 (JP)
(72) Inventor: TSURUMI, Shingo, Tokyo 108-0075 (JP)
(74) Representative: MFG Patentanwälte Meyer-Wildhagen Meggle-Freund Gerhard PartG mbB
(86) International application number: PCT/JP2022/041646
(87) International publication number: WO 2023/090213

(57) **Abstract**

An information processing apparatus (100) includes a control unit (130). The control unit (130) acquires a display area of a display apparatus (200) included in an image captured by an imaging apparatus. The control unit (130) generates a three-dimensional mask area and a three-dimensional feature point map based on the acquired display area. The control unit (130) estimates at least either a position or an orientation of the imaging apparatus using at least either the three-dimensional mask area or the three-dimensional feature point map and the feature point extracted from the image captured by the imaging apparatus.

## Description

### Field

The present disclosure relates to an information processing apparatus, an information processing method, and a program. Background

In the fields of augmented reality (AR), virtual reality (VR), automated driving, and the like, a technology for estimating a position and an orientation of a device in a real space based on a sensing result of a sensor mounted on the device has been conventionally known. For example, a technology for extracting feature points on a real space and generating a feature point map in which attributes and priorities are assigned to the feature points is known. In the technology, an information processing apparatus selects a feature point according to the attributes and priorities and estimates a self-position.

### Citation List

### Patent Literature

Patent Literature 1: WO 2017/168899 A

### Summary

### Technical Problem

For example, when a self-position of an imaging apparatus (or a device on which an imaging apparatus is mounted) is estimated by extracting a feature point from a captured image acquired by the imaging apparatus, and the captured image includes a moving image area, the accuracy of the self-position estimation may deteriorate.

For example, when a self-position of the imaging apparatus is estimated by comparing a feature point extracted from a captured image with a feature point stored in a feature point map, there is a possibility that a feature point included in a moving image area of the captured image is not stored in the feature point map. In this case, there is a possibility that a correct self-position of the imaging apparatus is not estimated.

Further, when a self-position is estimated by tracking a feature point extracted for each of a plurality of frames, there is a possibility that the movement of the feature point in a moving image area does not correspond to the movement of the imaging apparatus. Thus, self-position estimation of the imaging apparatus on the basis of the movement of the feature point in the moving image area may cause incorrect self-position estimation.

When there is a display apparatus that displays a television image or a game image in a real space, there is a possibility that the imaging apparatus acquires a captured image including the television image or the game image. When a captured image includes a moving image area such as a television image or a game image, for example, accuracy of estimating a self-position of the imaging apparatus (or a device on which the imaging apparatus is mounted) may deteriorate.

The present disclosure provides a mechanism capable of estimating a self-position more accurately even when a display apparatus that displays a moving image is included is included in a real space.

The above problem or object is merely one of a plurality of problems or objects that may be solved or achieved by a plurality of embodiments disclosed in the present specification.

### Solution to Problem

An information processing apparatus of the present disclosure includes a control unit. The control unit acquires a display area of a display apparatus included in an image captured by an imaging apparatus. The control unit generates a three-dimensional mask area and a three-dimensional feature point map based on the acquired display area. The control unit estimates at least either a position or an orientation of the imaging apparatus using at least either the three-dimensional mask area or the three-dimensional feature point map and the feature point extracted from the image captured by the imaging apparatus.

### Brief Description of Drawings

FIG. 1 is a diagram for describing an outline of an information processing system according to the present disclosure.
FIG. 2 is a diagram for describing an example of VO processing using a captured image including a display apparatus.
FIG. 3 is a diagram for describing an example of a feature point used for self-position estimation by an information processing apparatus according to the present disclosure.
FIG. 4 is a block diagram depicting a configuration example of a terminal apparatus according to an embodiment of the present disclosure.
FIG. 5 is a block diagram depicting a configuration example of an information processing apparatus according to a first embodiment of the present disclosure.
FIG. 6 is a block diagram depicting a configuration example of a map generation unit according to the embodiment of the present disclosure.
FIG. 7 is a diagram for describing a detection example of a display apparatus with an object detection unit according to the embodiment of the present disclosure.
FIG. 8 is a diagram for describing a mask space calculated by a mask space calculation unit according to the embodiment of the present disclosure.
FIG. 9 is a diagram for describing the mask space calculated by the mask space calculation unit according to the embodiment of the present disclosure.
FIG. 10 is a diagram for describing the mask space calculated by the mask space calculation unit according to the embodiment of the present disclosure.
FIG. 11 is a diagram for describing the mask space calculated by the mask space calculation unit according to the embodiment of the present disclosure.
FIG. 12 is a diagram for describing an example of a captured image acquired by the information processing apparatus according to the embodiment of the present disclosure for creating a feature point map.
FIG. 13 is a diagram for describing an example of a captured image acquired by the information processing apparatus according to the embodiment of the present disclosure for creating a feature point map.
FIG. 14 is a block diagram depicting a configuration example of a self-position estimation unit according to the embodiment of the present disclosure.
FIG. 15 is a diagram for describing an example of a captured image according to the embodiment of the present disclosure.
FIG. 16 is a diagram for describing an example of feature point mask processing executed by a first feature point masking unit according to the embodiment of the present disclosure.
FIG. 17 is a diagram for describing an example of a captured image according to the embodiment of the present disclosure.
FIG. 18 is a diagram for describing an example of feature point mask processing executed by a second feature point masking unit according to the embodiment of the present disclosure.
FIG. 19 is a flowchart illustrating an example of a flow of map generation processing according to the embodiment of the present disclosure.
FIG. 20 is a flowchart illustrating an example of a flow of VO processing according to the embodiment of the present disclosure.
FIG. 21 is a flowchart illustrating an example of a flow of localization processing according to the embodiment of the present disclosure.
FIG. 22 is a diagram for describing an example of input of a display area according to a first modification of the embodiment of the present disclosure.
FIG. 23 is a diagram for describing another example of input of the display area according to the first modification of the embodiment of the present disclosure.
FIG. 24 is a diagram for describing another example of input of the display area according to the first modification of the embodiment of the present disclosure.
FIG. 25 is a diagram for describing an example of a first method according to a second modification of the embodiment of the present disclosure.
FIG. 26 is a diagram for describing an example of a third method according to the second modification of the embodiment of the present disclosure.
FIG. 27 is a diagram for describing a server apparatus according to a second modification of the embodiment of the present disclosure.
FIG. 28 is a block diagram illustrating a configuration example of the server apparatus according to the second modification of the embodiment of the present disclosure.
FIG. 29 is a flowchart illustrating an example of a flow of determination processing according to the second modification of the embodiment of the present disclosure.
FIG. 30 is a flowchart illustrating an example of a flow of method acquisition processing according to the second modification of the embodiment of the present disclosure.
FIG. 31 is a flowchart illustrating an example of a flow of VO processing according to the second modification of the embodiment of the present disclosure.
FIG. 32 is a flowchart illustrating an example of a flow of localization processing according to the second modification of the embodiment of the present disclosure.
FIG. 33 is a hardware configuration diagram illustrating an example of a computer that realizes functions of the information processing apparatus according to the embodiment of the present disclosure.

### Description of Embodiments

Hereinafter, embodiments of the present disclosure will be described in detail with reference to the accompanying drawings. In the present specification and the drawings, components having substantially the same functional configuration are denoted by the same reference signs, and redundant description is omitted.

In the present specification and the drawings, specific values may be indicated and described, but the values are merely examples, and other values may be applied.

In the present specification and the drawings, similar components of the embodiments may be distinguished by adding different alphabets or numbers after the same reference signs. However, when it is not necessary to particularly distinguish each of similar components, only the same reference sign is assigned.

One or a plurality of embodiments (including Examples and Comparative Examples) described below can each be implemented independently. On the other hand, at least some of the plurality of embodiments described below may be appropriately combined with at least some of other embodiments. The plurality of embodiments may include novel features different from each other. Therefore, the plurality of embodiments can contribute to solving different objects or problems, and can exhibit different effects.

### <<1. Introduction>>

### <1.1. Outline of information processing system 1>

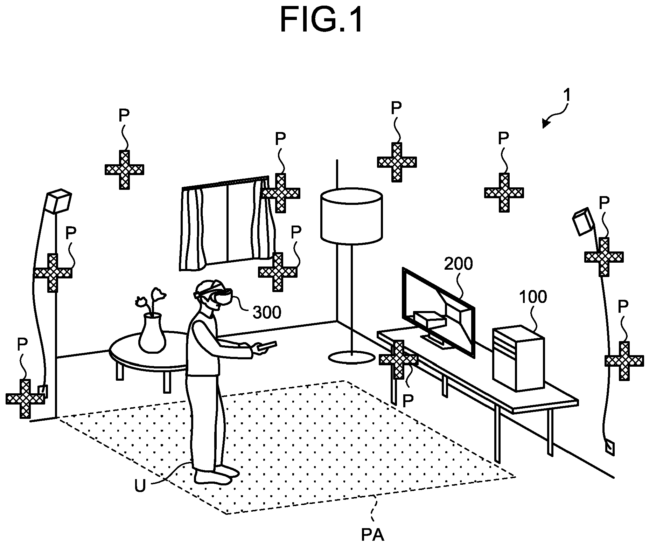

FIG. 1 is a diagram for describing an outline of an information processing system 1 according to the present disclosure. As illustrated in FIG. 1, the information processing system 1 includes an information processing apparatus 100, a display apparatus 200, and a terminal apparatus 300.

The information processing apparatus 100, the display apparatus 200, and the terminal apparatus 300 may communicate with each other via various wired or wireless networks. As a communication method used in the network, any method may be applied regardless of wired or wireless (for example, WiFi (registered trademark), Bluetooth (registered trademark), and the like).

The number of the information processing apparatus 100, the display apparatus 200, and the terminal apparatus 300 included in the information processing system 1 is not limited to the number illustrated in FIG. 1, and may be more.

The terminal apparatus 300 is, for example, a wearable device (eyewear device) such as a glasses-type HMD worn on the head by a user U.

The eyewear device applicable as the terminal apparatus 300 may be a so-called see-through type head mounted display (augmented reality (AR) glasses) that transmits an image of a real space, or may be a goggle type (virtual reality (VR) goggle) that does not transmit an image of a real space.

In the present disclosure, the terminal apparatus 300 is not limited to the HMD, and may be, for example, a tablet, a smartphone, or the like held by the user U.

The information processing apparatus 100 integrally controls the operation of the terminal apparatus 300. The information processing apparatus 100 is realized by, for example, a processing circuit such as a central processing unit (CPU) or a graphics processing unit (GPU). A detailed configuration of the information processing apparatus 100 according to the present disclosure will be described later.

The display apparatus 200 is realized by, for example, a liquid crystal display, an organic electro-luminescence (EL) display, or the like. The display apparatus 200 displays various types of information under the control of the information processing apparatus 100, for example.

Here, many devices that perform processing according to the movement of the user U have appeared recently. For example, there is a game in which a character displayed on a screen is synchronized with a motion of a user to move the character.

When the user always performs an operation like this game, the user is immersed in the operation and becomes unconscious of the surrounding environment, and a problem that the user collides with a surrounding object (obstacle) may occur. In particular, in VR in which the user plays while wearing an HMD, sometimes the user is not able to confirm the surrounding environment at all, and thus the risk of hitting a real object increases.

To protect the physical safety for the user U, the information processing apparatus 100 specifies a safe play area (allowable area) in which the user U does not come into contact with a real object, and it controls the HMD so that the user U moves in the play area.

For example, in FIG. 1, the area PA is specified as a play area where the user U can move or stretch his/her hand without hitting an obstacle. The play area may be represented as a three-dimensional area like a combination of a floor area indicated on the floor and a wall extending vertically from the floor area. Alternatively, the play area may be represented as a two-dimensional area of the floor area. In this manner, the play area may be set as a two-dimensional area or a three-dimensional area.

The area PA may be automatically set by the information processing apparatus 100 based on information acquired from a sensor of an imaging apparatus, an inertial measurement unit (IMU), or the like mounted on the HMD. Alternatively, the area PA may be manually set by the user U.

In addition, the information processing apparatus 100 stores a feature point P of the surrounding environment as a three-dimensional feature point map. The play area PA may be defined with respect to the feature point map. The feature point map and the play area PA may be set, for example, when the user U uses the information processing system 1 for the first time or when the user U starts a game.

The information processing apparatus 100 identifies at least either the position or the orientation (hereinafter, also simply referred to as self-position) of the terminal apparatus 300 with respect to the feature point map, thereby identifying the self-position of the terminal apparatus 300 and the play area PA with respect to a real space such as a room, for example. The processing of estimating the self-position of the terminal apparatus 300 with respect to the feature point map like this is also referred to as localization processing.

In addition, the information processing apparatus 100 acquires information regarding the surrounding environment and the like by using the sensor information acquired by a sensor mounted on the terminal apparatus 300. For example, the information processing apparatus 100 detects the self-position of the terminal apparatus 300 by an inside-out method base on a captured image of an imaging apparatus (not illustrated) mounted on the terminal apparatus 300.

For example, the information processing apparatus 100 extracts the feature point P included in the captured image of the imaging apparatus mounted on the terminal apparatus 300. The information processing apparatus 100 estimates the self-position of the terminal apparatus from the movement of the feature point P when the imaging apparatus moves. The processing of estimating the self-position of the terminal apparatus 300 from the movement of the feature point P of the captured image like this is also referred to as visual odometry (VO) processing.

The information processing apparatus 100 simultaneously performs localization processing and VO processing. The information processing apparatus 100 handles quick movement of the terminal apparatus 300 through VO processing and maintains consistency of relative positions between the terminal apparatus 300 and the play area PA through localization processing.

### <1.2. Problem>

Here, as illustrated in FIG. 1, when there is the display apparatus 200 capable of displaying a moving image in a real space, the estimation accuracy of the self-position of the terminal apparatus 300 may deteriorate.

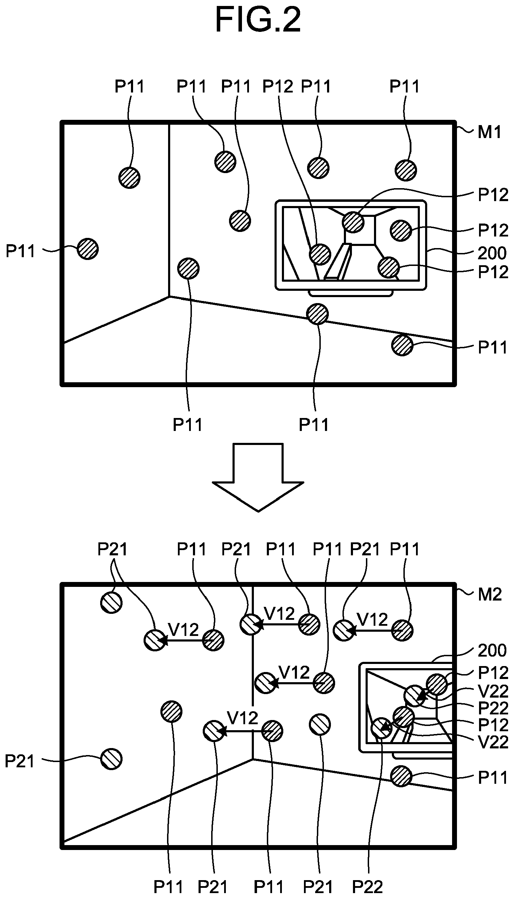

FIG. 2 is a diagram for describing an example of VO processing using a captured image M1 including the display apparatus 200. The upper diagram of FIG. 2 illustrates the captured image M1 acquired by the terminal apparatus 300 at a time t1, and the lower diagram of FIG. 2 illustrates a captured image M2 acquired by the terminal apparatus 300 at a time t2.

For example, when the user U is facing the display apparatus 200 (see FIG. 1), the captured image M1 acquired by the terminal apparatus 300 at the time t1 includes the display apparatus 200 as illustrated in the upper diagram of FIG. 2. In this case, the information processing apparatus 100 acquires a plurality of feature points P11 outside an area (hereinafter, also referred to as display area) including the display screen of the display apparatus 200. In addition, the information processing apparatus 100 acquires a plurality of feature points P12 in the display area.

Next, as illustrated in the lower diagram of FIG. 2, the terminal apparatus 300 acquires the captured image M2 at the time t2 next to the time t1. Here, it is assumed that the user U has moved leftward from the time t1 at the time t2.

As illustrated in the lower diagram of FIG. 2, when the display apparatus 200 is also included in the captured image M2 acquired at the time t2, the information processing apparatus 100 acquires a plurality of feature points P21 outside the display area of the display apparatus 200. In addition, the information processing apparatus 100 acquires a plurality of feature points P22 in the display area.

As illustrated in the lower diagram of FIG. 2, the information processing apparatus 100 selects the same feature points among the feature points included in the captured images M1 and M2, and detects the movement of the terminal apparatus 300 by tracking the movement (see the arrows in the drawing) of the selected feature points. The information processing apparatus 100 estimates the self-position of the terminal apparatus 300 from the detected motion.

Here, it is assumed that a moving image is displayed on the display apparatus 200, for example. In this case, a motion V12 of the feature points P11 and P21 detected outside the display area may be different from a motion V22 of the feature points P12 and P22 detected in the display area. This is because the feature points P11 and P21 outside the display area move in response to the movement of the terminal apparatus 300, whereas the feature points P12 and P22 inside the display area move in response to the movement of a moving image displayed on the display apparatus 200.

Thus, when the information processing apparatus 100 estimates the self-position of the terminal apparatus 300 using the motion V12 of the feature points P11 and P21 and the motion V22 of the feature points P12 and P22, the self-position may deviate (drift) and the estimation accuracy of the self-position may deteriorate.

Here, the accuracy deterioration in a case where the information processing apparatus 100 estimates the self-position of the terminal apparatus 300 using the VO processing has been described, but the estimation accuracy of the self-position deteriorates also in the localization process in the same manner. This is because, when the image displayed on the display apparatus 200 is different from the image at the time of creating the feature point map, the information processing apparatus 100 may extract a feature point that is not included in the feature point map.

When a moving image is displayed on the display apparatus 200, there is a possibility that the estimation accuracy of the self-position of the terminal apparatus 300 deteriorates like this due to the influence of the movement of the feature point extracted from the display screen of the display apparatus 200.

### <1.3. Outline of proposed technology>

Thus, the information processing system 1 according to the present disclosure estimates the self-position of the terminal apparatus 300 based on the feature point corresponding to the display area. The information processing apparatus 100 according to the present disclosure acquires a display area of the display apparatus 200 included in a captured image captured by the imaging apparatus mounted on the terminal apparatus 300. The information processing apparatus 100 generates a three-dimensional mask area and a three-dimensional feature point map based on the acquired display area. The information processing apparatus 100 estimates at least either the position or the orientation of the imaging apparatus using at least either the three-dimensional mask area or the feature point map and the feature point extracted from the captured image of the imaging apparatus.

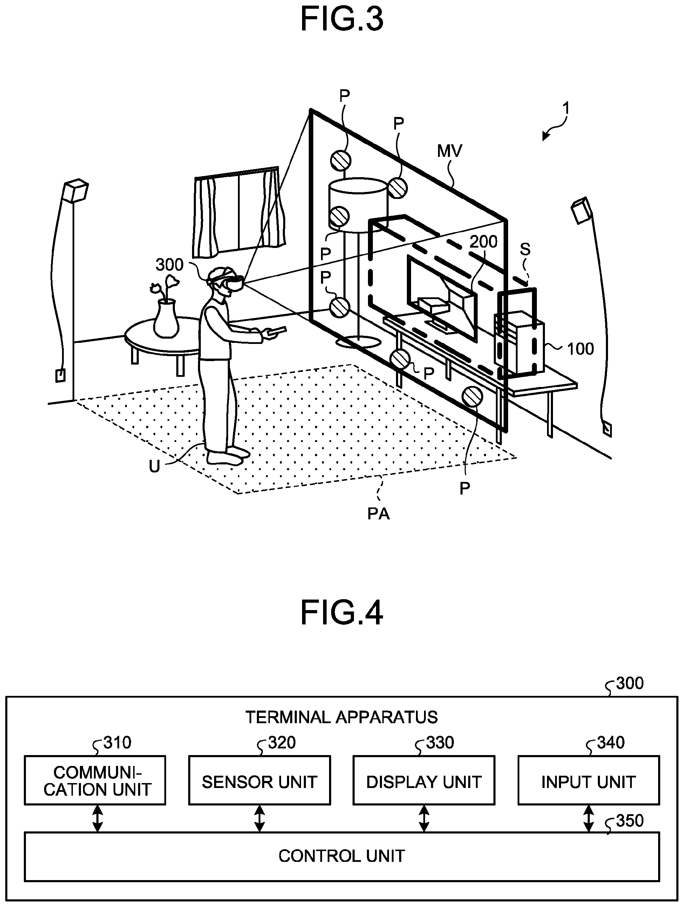

FIG. 3 is a diagram for describing an example of a feature point used for self-position estimation by the information processing apparatus 100 according to the present disclosure.

As illustrated in FIG. 3, the information processing apparatus 100 sets a three-dimensional mask area based on the display area of the display apparatus 200. In the example of FIG. 3, the information processing apparatus 100 sets a rectangular parallelepiped space including the display area of the display apparatus 200 as a three-dimensional mask area S (hereinafter, also referred to as mask space S).

The information processing apparatus 100 generates a feature point map using the feature point P present in the space outside the mask space S among the plurality of feature points included in a captured image M captured at an angle of view MV. In addition, the information processing apparatus 100 performs VO processing, localization processing, and the like by using the feature point P present in the space outside the mask space S and estimates the self-position of the imaging apparatus (or the terminal apparatus 300) .

In this manner, the information processing apparatus 100 estimates the self-position of the terminal apparatus 300 by using the information of the display area in which the display apparatus 200 may display a moving image. This allows the information processing apparatus 100 not to use the feature point corresponding to the display apparatus 200 for the self-position estimation even when the display apparatus 200 displays a moving image, which can prevent deterioration of the self-position estimation accuracy.

### <<2. Information processing system>>

### <2.1. Configuration example of terminal apparatus>

FIG. 4 is a block diagram depicting a configuration example of the terminal apparatus 300 according to an embodiment of the present disclosure. As illustrated in FIG. 4, the terminal apparatus 300 includes a communication unit 310, a sensor unit 320, a display unit 330, an input unit 340, and a control unit 350.

### [Communication unit 310]

The communication unit 310 exchanges information with another device. For example, the communication unit 310 transmits an image reproduction request and a sensing result of the sensor unit 320 to the information processing apparatus 100 under the control of the control unit 350. The communication unit 310 also receives an image to be reproduced from the information processing apparatus 100.

### [Sensor unit 320]

The sensor unit 320 may include, for example, an imaging apparatus (image sensor), a depth sensor, a microphone, an acceleration sensor, a gyroscope, a geomagnetic sensor, and a global positioning system (GPS) receiver. The sensor unit 320 may also include a speed sensor, an acceleration sensor, an angular velocity sensor (gyro sensor), and an inertial measurement unit (IMU) in which the speed sensor, the acceleration sensor, and the angular velocity sensor are integrated.

For example, the sensor unit 320 senses the facing direction, orientation, acceleration, or the like of the terminal apparatus 300 in a real space. The sensor unit 320 also senses depth information around the terminal apparatus 300. When the sensor unit 320 includes a distance measuring apparatus that senses depth information, the distance measuring apparatus may be a stereo camera, a distance image sensor of a time of flight (ToF) system, or the like.

### [Display unit 330]

The display unit 330 displays an image under the control of the control unit 350. For example, the display unit 330 may include a right-eye display unit and a left-eye display unit (not illustrated). In this case, the right-eye display unit projects an image using at least a partial area of a right-eye lens (not illustrated) included in the terminal apparatus 300 as a projection surface. The left-eye display unit projects an image using at least a partial area of a left-eye lens (not illustrated) included in the terminal apparatus 300 as a projection surface.

Alternatively, when the terminal apparatus 300 includes a goggle-type lens, the display unit 330 may project an image using at least a partial area of the goggle-type lens as a projection surface. The left-eye lens and the right-eye lens (or goggle-type lens) may be formed of, for example, a transparent material such as resin or glass.

Alternatively, the display unit 330 may be configured as a non-transmissive display apparatus. For example, the display unit 330 may include a liquid crystal display (LCD), an organic light emitting diode (OLED), or the like. In this case, an image in front of the user U captured by the sensor unit 320 (camera) may be sequentially displayed on the display unit 330. This configuration allows the user U to visually recognize the scenery in front of the user U through the image displayed on the display unit 330.

### [Input unit 340]

The input unit 340 may include a touch panel, a button, a lever, and a switch. The input unit 340 receives various inputs of the user U. For example, when an AI character is arranged in a virtual space, the input unit 340 may receive an input of the user U for changing the arrangement position and the like of the AI character.

### [Control unit 350]

The control unit 350 integrally controls the operation of the terminal apparatus 300 using, for example, a CPU, a graphics processing unit (GPU), a RAM, and the like built in the terminal apparatus 300. For example, the control unit 350 causes the display unit 330 to display an image received from the information processing apparatus 100.

As an example, it is assumed that the information processing apparatus 100 receives an omnidirectional image. In this case, the control unit 350 causes the display unit 330 to display an image of a portion corresponding to the information on the position and orientation of the terminal apparatus 300 (or the user U or the like) in the omnidirectional image.

When the display unit 330 includes a right-eye display unit and a left-eye display unit (not illustrated), the control unit 350 generates a right-eye image and a left-eye image based on the image received from the information processing apparatus 100. Then, the control unit 350 displays the right-eye image on the right-eye display unit and displays the left-eye image on the left-eye display unit. With this configuration, the control unit 350 can cause the user U to view a stereoscopic vision.

The control unit 350 may perform various types of recognition processing based on a sensing result with the sensor unit 320. For example, the control unit 350 may recognize an action (for example, a gesture of the user U and a movement of the user U) of the user U wearing the terminal apparatus 300 based on the sensing result.

### <2.2. Configuration example of information processing apparatus>

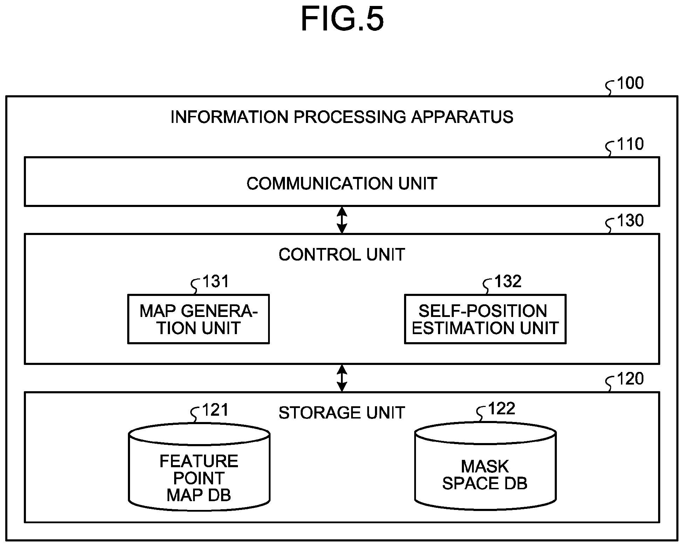

FIG. 5 is a block diagram depicting a configuration example of the information processing apparatus 100 according to a first embodiment of the present disclosure. As illustrated in FIG. 5, the information processing apparatus 100 includes a communication unit 110, a storage unit 120, and a control unit 130.

### [Communication unit 110]

The communication unit 110 exchanges information with another device. For example, the communication unit 110 transmits an image to be reproduced to the information processing apparatus 100 under the control of the control unit 130. The communication unit 110 also receives an image reproduction request and a sensing result from the terminal apparatus 300. The communication unit 110 may communicate with an external server such as a game server via a network.

### [Storage unit 120]

The storage unit 120 is realized by, for example, a semiconductor memory device such as a random access memory (RAM), a read only memory (ROM), or a flash memory, or a storage device such as a hard disk or an optical disk.

The storage unit 120 includes a feature point map DB 121 and a mask space DB 122. The feature point map DB 121 stores a feature point map generated by the control unit 130. The mask space DB 122 stores the mask space generated by the control unit 130.

### [Control unit 130]

The control unit 130 integrally controls the operation of the information processing apparatus 100 using, for example, a CPU, a graphics processing unit (GPU), and a RAM built in the information processing apparatus 100. For example, the control unit 130 is realized by a processor executing various programs stored in a storage device inside the information processing apparatus 100 using a random access memory (RAM) or the like as a work area. The control unit 130 may be realized by an integrated circuit such as an application specific integrated circuit (ASIC) or a field programmable gate array (FPGA). Any of the CPU, the MPU, the ASIC, and the FPGA can be regarded as a controller.

As illustrated in FIG. 5, the control unit 130 includes a map generation unit 131 and a self-position estimation unit 132. Each block (map generation unit 131 and self-position estimation unit 132) constituting the control unit 130 is a functional block indicating a function of the control unit 130. These functional blocks may be software blocks or hardware blocks. For example, each of the functional blocks described above may be one software module realized by software (including microprogram), or may be one circuit block on a semiconductor chip (die). Of course, each functional block may be one processor or one integrated circuit. Any configuration method of the functional block may be taken. The control unit 130 may be configured by a functional unit different from the above-described functional blocks.

### [Map generation unit 131]

The map generation unit 131 generates a mask space and a feature point map based on the captured image acquired by the terminal apparatus 300.

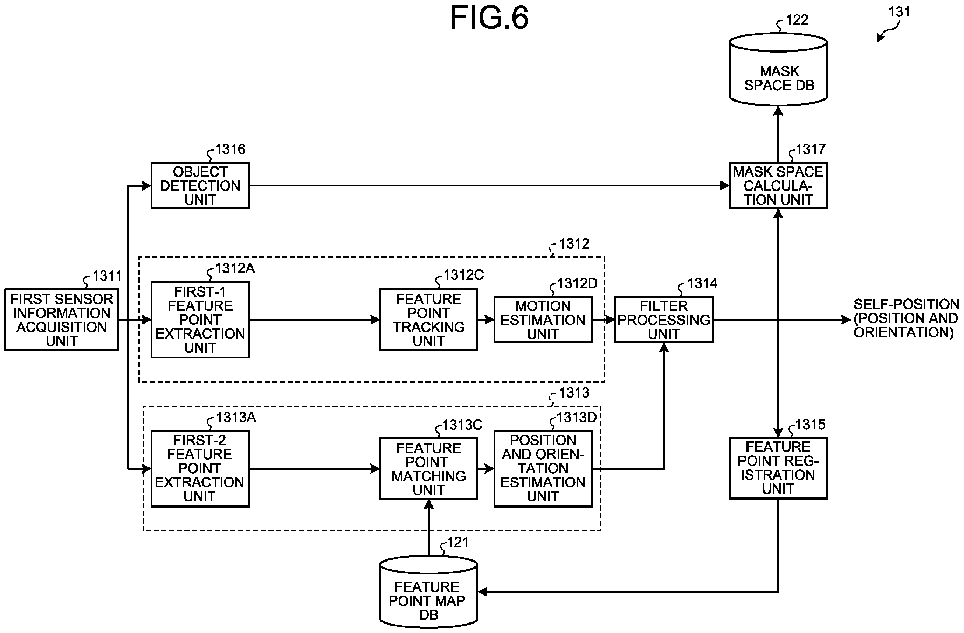

FIG. 6 is a block diagram depicting a configuration example of the map generation unit 131 according to the embodiment of the present disclosure. The map generation unit 131 includes a first sensor information acquisition unit 1311, a first VO processing unit 1312, a first localization processing unit 1313, a first filter processing unit 1314, a feature point registration unit 1315, an object detection unit 1316, and a mask space calculation unit 1317.

### [First sensor information acquisition unit 1311]

The first sensor information acquisition unit 1311 acquires a sensing result by the sensor unit 220 (see FIG. 4) of the terminal apparatus 300 as sensor information. The sensor information includes, for example, sensor data (for example, captured image, acceleration, and angular velocity) acquired by an imaging apparatus, an IMU, or the like.

The first sensor information acquisition unit 1311 illustrated in FIG. 6 outputs the acquired sensor information to the first VO processing unit 1312, the first localization processing unit 1313, and the object detection unit 1316.

### [First VO processing unit 1312]

The first VO processing unit 1312 estimates the self-position of the terminal apparatus 300 using a visual odometry method based on the sensor information acquired by the first sensor information acquisition unit 1311. The first VO processing unit 1312 includes a first-1 feature point extraction unit 1312A, a first feature point tracking unit 1312C, and a first motion estimation unit 1312D.

The first-1 feature point extraction unit 1312A extracts, for example, a feature point for estimating motion (position and orientation) between image frames from the captured image. The first-1 feature point extraction unit 1312A outputs the extracted feature point to the first feature point tracking unit 1312C.

For example, the first feature point tracking unit 1312C tracks the feature point extracted by the first-1 feature point extraction unit 1312A. For example, the first feature point tracking unit 1312C selects a corresponding feature point between image frames and calculates the movement of the selected feature point. The first feature point tracking unit 1312C outputs the motion information regarding the calculated motion of the feature point to the first motion estimation unit 1312D.

The first motion estimation unit 1312D estimates motion information of the imaging apparatus (or the terminal apparatus 300) based on the motion information acquired from the first feature point tracking unit 1312C and the sensor information (for example, acceleration and angular velocity) of the IMU sensor acquired from the first sensor information acquisition unit 1311. The motion information includes, for example, position information and orientation information of the imaging apparatus. The first motion estimation unit 1312D outputs the estimated motion information to the first filter processing unit 1314.

### [First localization processing unit 1313]

The first localization processing unit 1313 performs localization processing based on the sensor information acquired by the first sensor information acquisition unit 1311 to estimate the self-position of the terminal apparatus 300. The first localization processing unit 1313 includes a first-2 feature point extraction unit 1313A, a first feature point matching unit 1313C, and a first position and orientation estimation unit 1313D.

The first-2 feature point extraction unit 1313A extracts, for example, a feature point to be used for creation of a feature point map and self-position estimation for the feature point map from the captured image. The first-2 feature point extraction unit 1313A outputs the extracted feature point to the first feature point matching unit 1313C.

The first feature point matching unit 1313C matches the feature point extracted by the first-2 feature point extraction unit 1313A with the feature point included in the feature point map. The first feature point matching unit 1313C outputs a matching result to the first position and orientation estimation unit 1313D.

The first position and orientation estimation unit 1313D estimates the position and orientation information of the imaging apparatus (or the terminal apparatus 300) with respect to the feature point map based on the matching result of the feature points with the first feature point matching unit 1313C. The first position and orientation estimation unit 1313D outputs the estimated position and orientation information to the first filter processing unit 1314.

### [First filter processing unit 1314]

The first filter processing unit 1314 performs filtering on the motion information estimated by the first VO processing unit 1312 and the position and orientation information estimated by the first localization processing unit 1313 to integrate the two pieces of information, and estimates the self-position information of the imaging apparatus (or the terminal apparatus 300). The first filter processing unit 1314 integrates the motion information and the position and orientation information using, for example, an extended Kalman filter, and generates self-position information. This allows the information processing apparatus 100 to stably estimate the self-position of the terminal apparatus 300.

The first filter processing unit 1314 outputs the generated self-position information to the feature point registration unit 1315 and the mask space calculation unit 1317.

### [Feature point registration unit 1315]

The feature point registration unit 1315 generates or updates a feature point map based on the self-position information generated by the first filter processing unit 1314 and the feature point extracted by the first localization processing unit 1313. For example, the feature point registration unit 1315 registers the feature point in the feature point map based on the position and orientation of the terminal apparatus 300. The feature point map is stored in the feature point map DB 121.

### [Object detection unit 1316]

The object detection unit 1316 detects the display apparatus 200 included in the captured image based on the sensor information acquired by the first sensor information acquisition unit 1311.

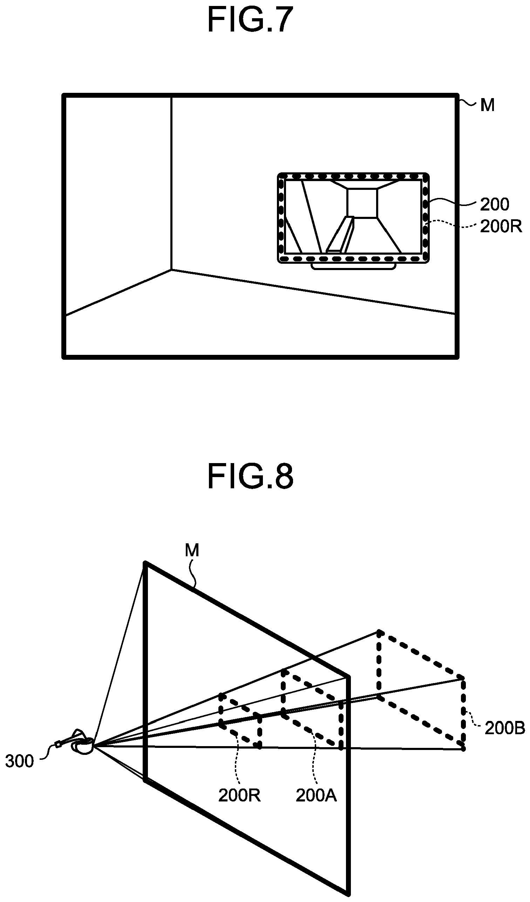

FIG. 7 is a diagram for describing a detection example of the display apparatus 200 with the object detection unit 1316 according to the embodiment of the present disclosure.

As illustrated in FIG. 7, it is assumed that, for example, a fixed pattern image (an example of a predetermined image) is displayed on the display apparatus 200. The display apparatus 200 displays the fixed pattern image in accordance with an instruction from the information processing apparatus 100, for example.

The object detection unit 1316 detects a display area 200R of the display apparatus 200 by detecting the fixed pattern image from the captured image.

Returning to FIG. 6, the object detection unit 1316 outputs the display area information regarding the detected display area 200R to the mask space calculation unit 1317.

Here, the object detection unit 1316 detects the display area 200R of the display apparatus 200 by detecting the fixed pattern image, but the present invention is not limited to this configuration. For example, the object detection unit 1316 may detect the display area 200R of the display apparatus 200 using Semantic Segmentation.

### [Mask space calculation unit 1317]

The mask space calculation unit 1317 illustrated in FIG. 6 calculates the mask space S based on the display area information acquired from the object detection unit 1316 and the self-position of the terminal apparatus 300 acquired from the first filter processing unit 1314.

FIGS. 8 to 11 are diagrams for describing the mask space S calculated by the mask space calculation unit 1317 according to the embodiment of the present disclosure.

As described above, the mask space calculation unit 1317 acquires the display area information from the object detection unit 1316. The display area information is information indicating the display area 200R on the captured image. It is difficult to specify the position of the display apparatus 200 in a coordinate system (hereinafter, also referred to as map coordinate system) of the feature point map from the display area information. This is because the size of the display apparatus 200 varies depending on the environment (information processing system 1) to be used.

As illustrated in FIG. 8, even when the display area 200R is photographed as a rectangular area of the same size on the captured image M, a display apparatus 200A having a small screen size is positioned near the terminal apparatus 300, and a display apparatus 200B having a large screen size is positioned far from the terminal apparatus 300.

The position of the display apparatus 200 in a map coordinate system is not able to be uniquely specified from the display area information detected by the object detection unit 1316 in some cases like this.

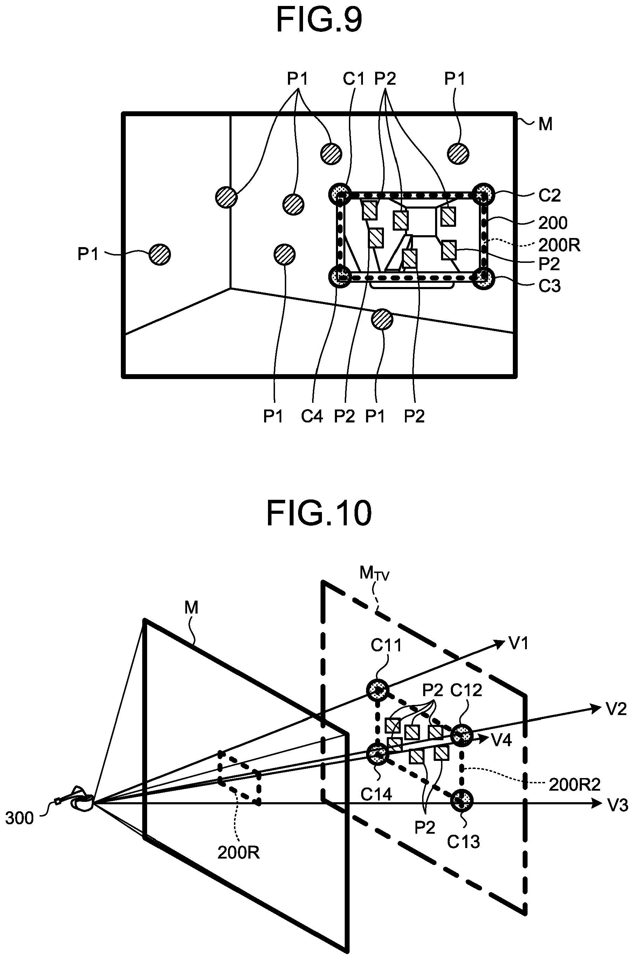

Thus, the mask space calculation unit 1317 according to the embodiment of the present disclosure calculates the position of the display apparatus 200 in a map coordinate system using the feature point P2 extracted from the captured image M illustrated in FIG. 9 and corners C1 to C4 of the display area 200R.

First, as illustrated in FIG. 9, the mask space calculation unit 1317 extracts a plurality of feature points from the captured image M. The plurality of feature points include a plurality of feature points P1 being present outside the display area 200R and a plurality of feature points P2 being present in the display area 200R.

As illustrated in FIG. 10, the mask space calculation unit 1317 calculates a display plane M_{TV} including the display area 200R using at least three feature points P2 being present in the display area 200R. The mask space calculation unit 1317 calculates intersections C11 to C14 between vectors V1 to V4 extending from the terminal apparatus 300 to the corners C1 to C4 on the captured image M and the display plane M_{TV}. The mask space calculation unit 1317 sets a rectangular area having the intersections C11 to C14 as vertices as the display area 200R in the map coordinate system.

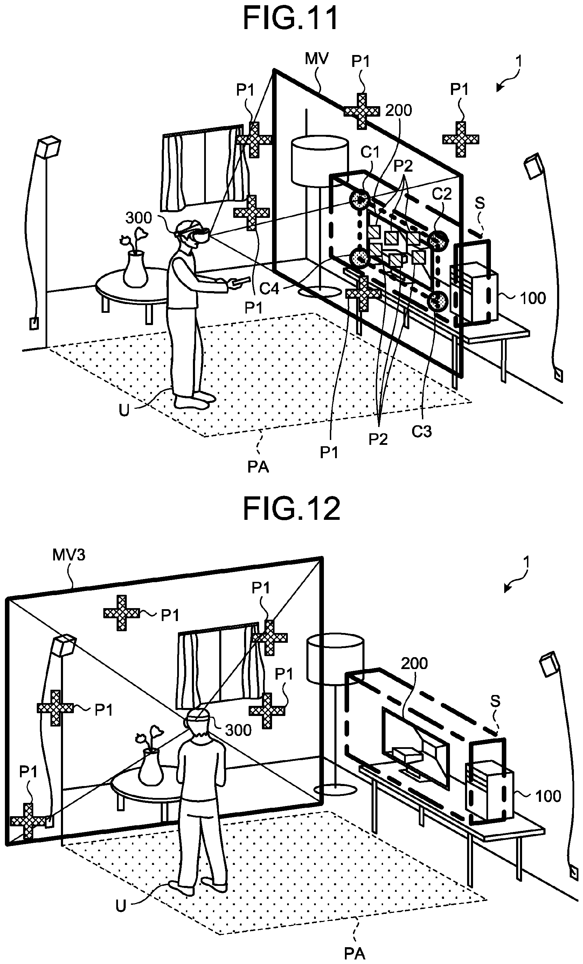

As illustrated in FIG. 11, the mask space calculation unit 1317 calculates, as the mask space S, a rectangular parallelepiped area obtained by expanding (extending) the display area 200R in the map coordinate system in three directions of vertical, horizontal, and depth directions. This allows the mask space calculation unit 1317 to set a three-dimensional area including the display apparatus 200 as the mask space S in the map coordinate system.

Returning to FIG. 6, the mask space calculation unit 1317 stores the calculated mask space S in the mask space DB.

When the information processing apparatus 100 creates a map, for example, the user U is instructed to acquire the captured image M at various positions and angles by moving in the play area PA or looking around the real space. The information processing apparatus 100 creates/updates the feature point map, creates/updates the mask space S, and the like using the captured image M captured while the user U moves.

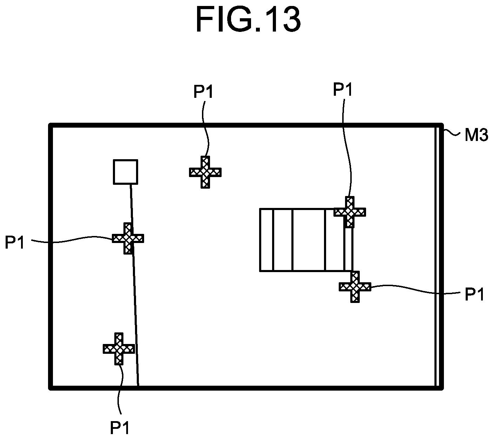

FIGS. 12 and 13 are diagrams for describing an example of the captured image M acquired by the information processing apparatus 100 according to the embodiment of the present disclosure for creating a feature point map.

For example, the user U who has been facing the display apparatus 200 side as illustrated in FIG. 11 changes the direction to the window side as illustrated in FIG. 12 in accordance with an instruction from the information processing apparatus 100. This causes the information processing apparatus 100 to acquire a captured image M3 obtained by capturing the window side at an angle of view MV3 as illustrated in FIG. 13.

The map generation unit 131 of the information processing apparatus 100 generates/updates the feature point map based on the feature point P1 included in the captured image M3. In this manner, the user U moves or looks around the real space to acquire the captured image M, whereby the information processing apparatus 100 can generate the feature point map of the real space with higher accuracy.

At this time, the map generation unit 131 according to the embodiment of the present disclosure generates/updates the mask space S in addition to the feature point map. The map generation unit 131 may generate/update the feature point map based on the generated mask space S.

Specifically, when registering the feature point in the feature point map, the feature point registration unit 1315 illustrated in FIG. 6 registers the feature point outside the mask space S in the feature point map. That is, the feature point registration unit 1315 generates/updates the feature point map using the feature point outside the mask space S. For example, in FIG. 11, the map generation unit 131 extracts both the feature point P1 outside the mask space S and the feature point P2 inside the mask space S. For example, the feature point registration unit 1315 deletes the feature point P2 in the mask space S and registers the feature point P1 outside the mask space S in the feature point map.

Here, the mask space S is used when the feature point registration unit 1315 generates the feature point map, but the present invention is not limited to this configuration. For example, in the first VO processing unit 1312 and the first localization processing unit 1313, the mask space S may be used when the self-position of the terminal apparatus 300 is estimated. A method for using the mask space S in such processing will be described later.

### [Self-position estimation unit 132]

The description returns to FIG. 5. The self-position estimation unit 132 estimates the self-position of the terminal apparatus 300 using at least either the mask space or the feature point map and the captured image acquired by the terminal apparatus 300.

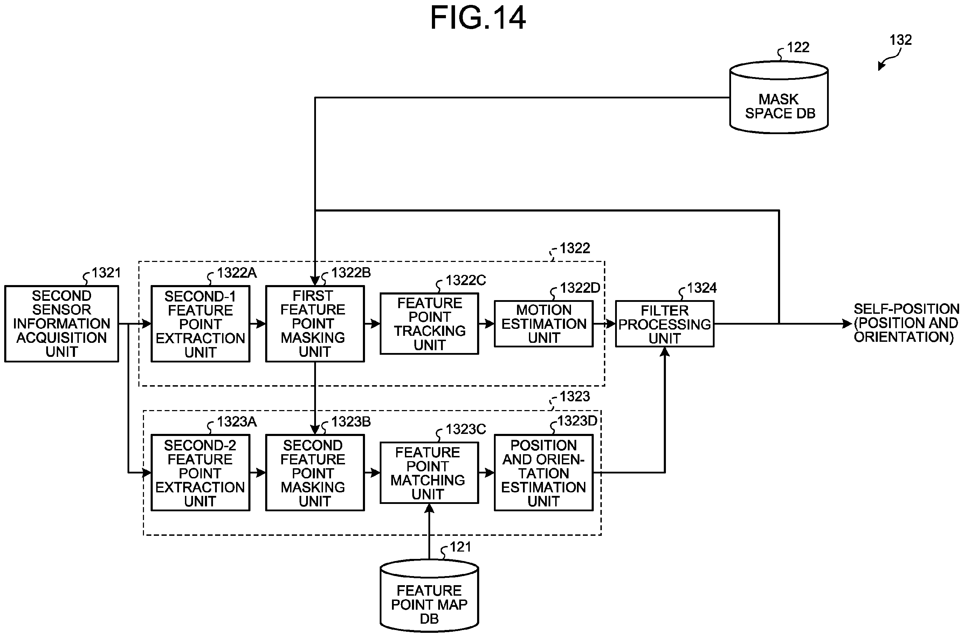

FIG. 14 is a block diagram depicting a configuration example of the self-position estimation unit 132 according to the embodiment of the present disclosure. The self-position estimation unit 132 includes a second sensor information acquisition unit 1321, a second VO processing unit 1322, a second localization processing unit 1323, and a second filter processing unit 1324.

### [Second sensor information acquisition unit 1321]

The second sensor information acquisition unit 1321 acquires a sensing result with the sensor unit 220 (see FIG. 4) of the terminal apparatus 300 as sensor information. The second sensor information acquisition unit 1321 outputs the acquired sensor information to the second VO processing unit 1322 and the second localization processing unit 1323.

### [Second VO processing unit 1322]

The second VO processing unit 1322 estimates the self-position of the terminal apparatus 300 using a visual odometry method based on the sensor information acquired by the second sensor information acquisition unit 1321. The second VO processing unit 1322 includes a second-1 feature point extraction unit 1322A, a first feature point masking unit 1322B, a second feature point tracking unit 1322C, and a second motion estimation unit 1322D.

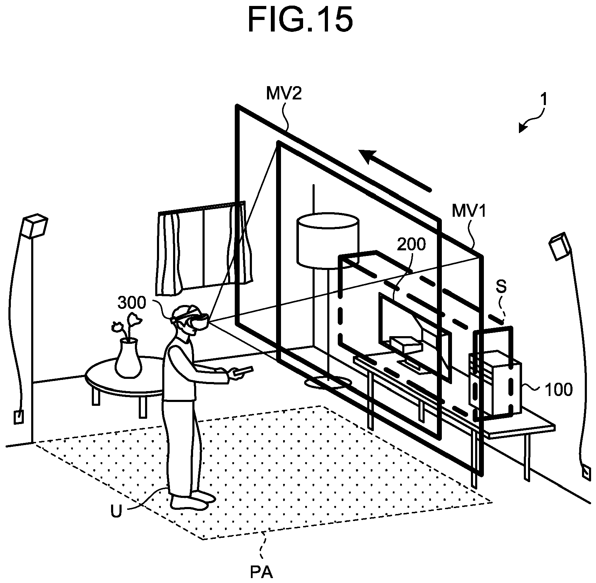

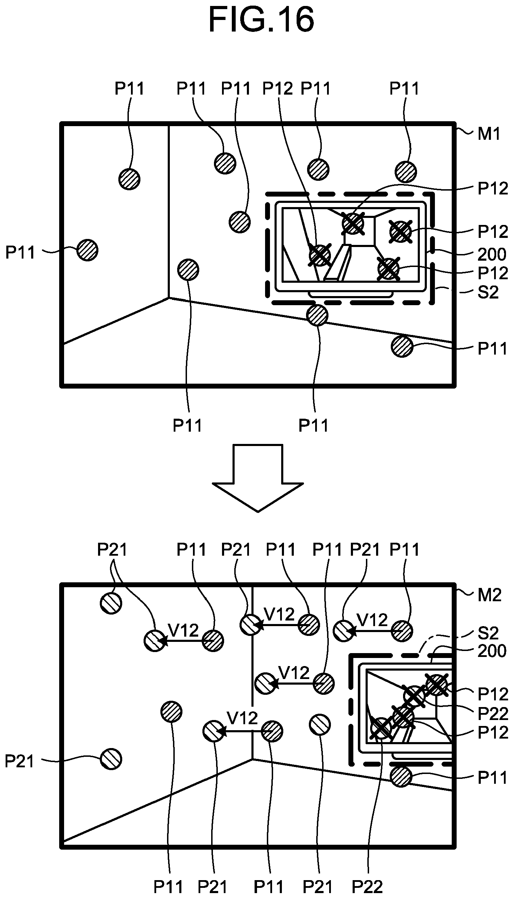

Hereinafter, an example of processing performed by each unit of the second VO processing unit 1322 will be described with reference to FIGS. 15 and 16. FIG. 15 is a diagram for describing an example of the captured image M according to the embodiment of the present disclosure. FIG. 16 is a diagram for describing an example of feature point mask processing executed by the first feature point masking unit 1322B according to the embodiment of the present disclosure.

### (Second-1 feature point extraction unit 1322A)

The second-1 feature point extraction unit 1322A illustrated in FIG. 14 extracts, for example, a feature point for estimating motion (position and orientation) between image frames from the captured image M.

Here, as illustrated in FIG. 15, it is assumed that the line of sight of the user U moves from right to left. In this case, the terminal apparatus 300 acquires the captured image M1 having an angle of view MV1 at the time t1, and acquires the captured image M2 having an angle of view MV2 at the time t2.

The second-1 feature point extraction unit 1322A extracts feature points P11, P12, P21, and P22 (see FIG. 16) from the captured images M1 and M2. As illustrated in FIG. 14, the second-1 feature point extraction unit 1322A outputs the extracted feature points to the first feature point masking unit 1322B.

### (First feature point masking unit 1322B)

The first feature point masking unit 1322B illustrated in FIG. 14 masks a feature point corresponding to the mask space S among the feature points extracted by the second-1 feature point extraction unit 1322A.

As illustrated in the upper diagram of FIG. 16, the first feature point masking unit 1322B calculates a two-dimensional mask area S2 (hereinafter, also referred to as mask area S2) corresponding to the mask space S in the captured image M1 based on, for example, the self-position of the terminal apparatus 300 and the information regarding the mask space S. For example, the first feature point masking unit 1322B calculates the mask area S2 by projecting the mask space S on the captured image M1.

The first feature point masking unit 1322B selects the feature point P11 in an area (hereinafter, also referred to as mask outer area) outside the mask area S2 in the captured image M1, and outputs the selected feature point to the second feature point tracking unit 1322C. For example, the first feature point masking unit 1322B deletes the feature point P12 in the mask area S2 and selects the remaining feature point P11 as a feature point to be used in the VO processing.

As illustrated in the lower diagram of FIG. 16, the first feature point masking unit 1322B calculates the mask area S2 for the captured image M2 in the same manner. The first feature point masking unit 1322B selects the feature point P21 in the mask outer area in the captured image M2 and deletes the feature point P12 in the mask area S2.

Returning to FIG. 14, the first feature point masking unit 1322B outputs the selected feature point P21 to the second feature point tracking unit 1322C.

### (Second feature point tracking unit 1322C)

The second feature point tracking unit 1322C illustrated in FIG. 14 tracks, for example, the feature point selected by the first feature point masking unit 1322B. For example, the second feature point tracking unit 1322C detects corresponding feature points in the captured images M1 and M2 and calculates a motion V12 (see the lower diagram of FIG. 16) of the detected feature point. The second feature point tracking unit 1322C outputs the motion information regarding the calculated motion V12 of the feature point to the second motion estimation unit 1322D.

Here, the feature points P11 and P21 tracked by the second feature point tracking unit 1322C do not include the feature points P12 and P22 in the mask area S2 with the first feature point masking unit 1322B. Thus, even when a moving image is displayed in the display area 200R of the display apparatus 200, the second feature point tracking unit 1322C can track the feature points P12 and P22 without using the feature points P11 and P21 in the display area 200R. This allows the second feature point tracking unit 1322C to calculate the motion V12 of the feature points P11 and P21 corresponding to the movement of the terminal apparatus 300 with higher accuracy.

### (Second motion estimation unit 1322D)

The second motion estimation unit 1322D estimates motion information of the imaging apparatus (or the terminal apparatus 300) based on the motion information acquired from the second feature point tracking unit 1322C and the sensor information (for example, acceleration and angular velocity) of the IMU sensor acquired from the second sensor information acquisition unit 1321. The second motion estimation unit 1322D outputs the estimated motion information to the second filter processing unit 1324.

### [Second localization processing unit 1323]

The second localization processing unit 1323 performs localization processing based on the sensor information acquired by the second sensor information acquisition unit 1321 to estimate the self-position of the terminal apparatus 300. The second localization processing unit 1323 includes a second-2 feature point extraction unit 1323A, a second feature point masking unit 1323B, a second feature point matching unit 1323C, and a second position and orientation estimation unit 1323D.

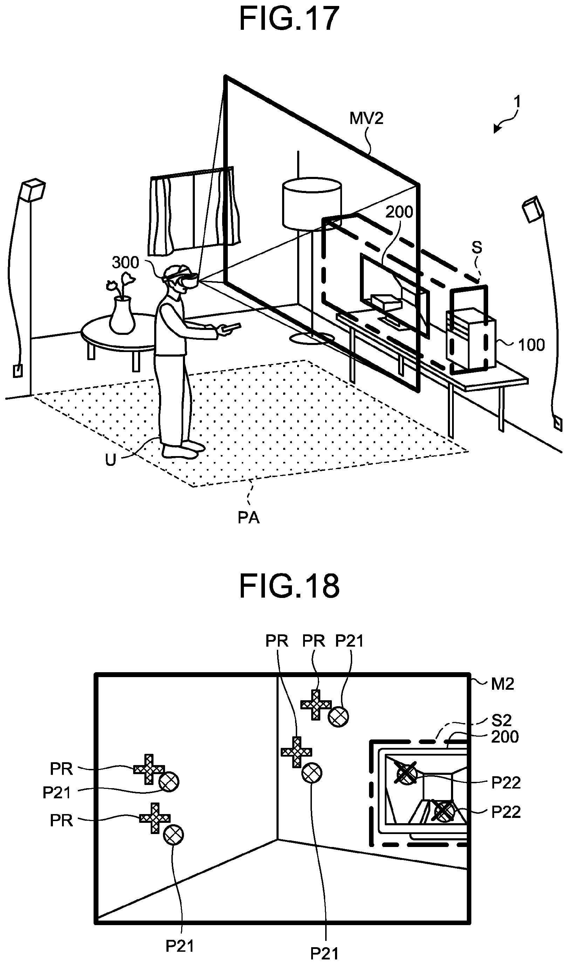

Hereinafter, an example of processing performed by each unit of the second localization processing unit 1323 will be described with reference to FIGS. 17 and 18. FIG. 17 is a diagram for describing an example of the captured image M2 according to the embodiment of the present disclosure. FIG. 18 is a diagram for describing an example of feature point mask processing executed by the second feature point masking unit 1323B according to the embodiment of the present disclosure.

### (Second-2 feature point extraction unit 1323A)

The second-2 feature point extraction unit 1323A illustrated in FIG. 14 extracts, for example, a feature point used for creation of a feature point map and self-position estimation for the feature point map from the captured image. The second-2 feature point extraction unit 1323A outputs the extracted feature point to the second feature point masking unit 1323B.

As illustrated in FIG. 17, the terminal apparatus 300 acquires the captured image M2 having the angle of view MV2 at the time t2, for example. The second-2 feature point extraction unit 1323A extracts feature points P21 and P22 from the captured image M2 (see FIG. 18). As illustrated in FIG. 14, the second-2 feature point extraction unit 1323A outputs the extracted feature points P21 and P22 to the second feature point masking unit 1323B.

### (Second feature point masking unit 1323B)

The second feature point masking unit 1323B illustrated in FIG. 14 masks the feature point P21 corresponding to the mask space S among the feature points P22 and P22 extracted by the second-2 feature point extraction unit 1323A.

As illustrated in FIG. 18, the second feature point masking unit 1323B calculates a two-dimensional mask area S2 (hereinafter, also referred to as mask area S2) corresponding to the mask space S in the captured image M2 based on, for example, the self-position of the terminal apparatus 300 and the information regarding the mask space S. For example, the second feature point masking unit 1323B calculates the mask area S2 by projecting the mask space S on the captured image M2.

The second feature point masking unit 1323B selects the feature point P21 in an area (hereinafter, also referred to as mask outer area) outside the mask area S2 in the captured image M2, and outputs the selected feature point to the second feature point matching unit 1323C. For example, the second feature point masking unit 1323B deletes the feature point P22 in the mask area S2 and selects the remaining feature point P21 as a feature point to be used in the localization processing.

Returning to FIG. 14, the second feature point masking unit 1323B outputs the selected feature point P22 to the second feature point matching unit 1323C.

### (Second feature point matching unit 1323C)

As illustrated in FIG. 18, the second feature point matching unit 1323C matches the feature point P21 selected by the second feature point masking unit 1323B with a feature point PR included in the feature point map. The second feature point matching unit 1323C outputs a matching result to the second position and orientation estimation unit 1323D.

### (Second position and orientation estimation unit 1323D)

The second position and orientation estimation unit 1323D estimates the position and orientation information of the imaging apparatus (or the terminal apparatus 300) with respect to the feature point map based on the matching result of the feature points with the second feature point matching unit 1323C. The second position and orientation estimation unit 1323D outputs the estimated position and orientation information to the second filter processing unit 1324.

### [Second filter processing unit 1324]

The second filter processing unit 1324 performs filtering on the motion information estimated by the second VO processing unit 1322 and the position and orientation information estimated by the second localization processing unit 1323 to integrate the two pieces of information, and estimates the self-position information of the imaging apparatus (or the terminal apparatus 300). The second filter processing unit 1324 integrates the motion information and the position and orientation information using, for example, an extended Kalman filter, and generates self-position information. This allows the information processing apparatus 100 to stably estimate the self-position of the terminal apparatus 300.

The second filter processing unit 1324 outputs an estimation result of the self-position of the terminal apparatus 300 to a processing unit (not illustrated) in the subsequent stage, for example. The self-position of the terminal apparatus 300 estimated by the second filter processing unit 1324 is used for, for example, drawing processing of an image to be presented to the user U or processing for guiding the user U so that the user U does not deviate from the play area PA.

### <<3. Example of information processing>>

### <3.1. Map generation processing>

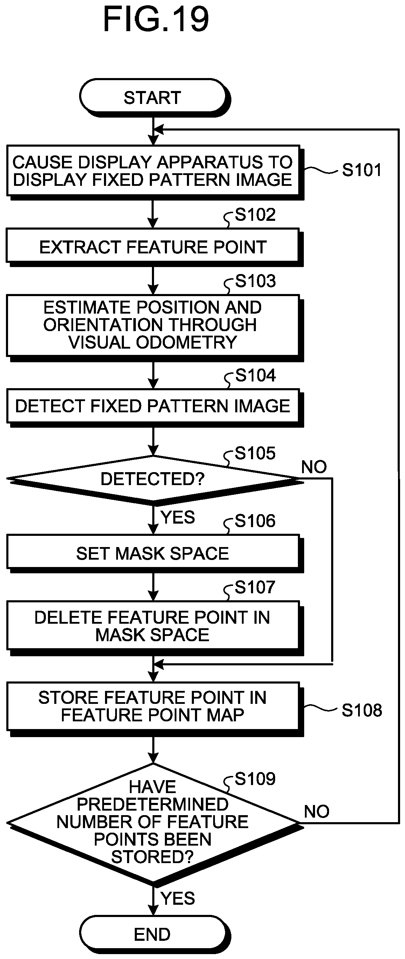

FIG. 19 is a flowchart illustrating an example of a flow of map generation processing according to the embodiment of the present disclosure. The map generation processing illustrated in FIG. 19 is executed by the information processing apparatus 100, for example, when the information processing system 1 is used for the first time or before a game starts.

As illustrated in FIG. 19, the information processing apparatus 100 causes the display apparatus 200 to display a fixed pattern image (Step S101). The fixed pattern image is a recognition image for the information processing apparatus 100 to recognize the display area of the display apparatus 200.

Next, the information processing apparatus 100 extracts feature points from the captured image M acquired by the terminal apparatus 300 (Step S102). The information processing apparatus 100 estimates the position and orientation of the terminal apparatus 300 as motion information using visual odometry (VO) (Step S103).

The information processing apparatus 100 detects a fixed pattern image from the captured image M (Step S104). The information processing apparatus 100 determines whether a fixed pattern image has been detected from the captured image M (Step S105).

When a fixed pattern image has not been detected (Step S105; No), the information processing apparatus 100 proceeds to Step S108. When a fixed pattern image is detected (Step S105; Yes), the information processing apparatus 100 sets the mask space S based on the fixed pattern image (Step S106).

The information processing apparatus 100 deletes the feature point in the mask space S set in Step S106 among the feature points extracted in Step S102 (Step S107).

The information processing apparatus 100 stores the feature points in a feature point map (Step S108). The information processing apparatus 100 determines whether a predetermined number of feature points have been stored in the feature point map (Step S109). When the number of stored feature points is less than the predetermined number (Step S109; No), the information processing apparatus 100 returns to Step S101. When the number of stored feature points is equal to or larger than the predetermined number (Step S109; Yes), the information processing apparatus 100 ends the processing.

Here, the information processing apparatus 100 determines whether to end the map generation processing according to the number of registered feature points, but the present invention is not limited to this configuration. For example, the information processing apparatus 100 may end the processing according to whether the feature points are stored in the feature point map in a predetermined area. Alternatively, the information processing apparatus 100 may end the processing according to whether a predetermined number of feature points are stored in the feature point map in a predetermined area.

### <3.2. Self-position estimation processing>

Next, self-position estimation processing performed by the information processing apparatus 100 will be described. The information processing apparatus 100 executes visual odometry (VO) processing and localization processing as the self-position estimation processing.

### <3.2.1. VO (Visual odometry) processing>

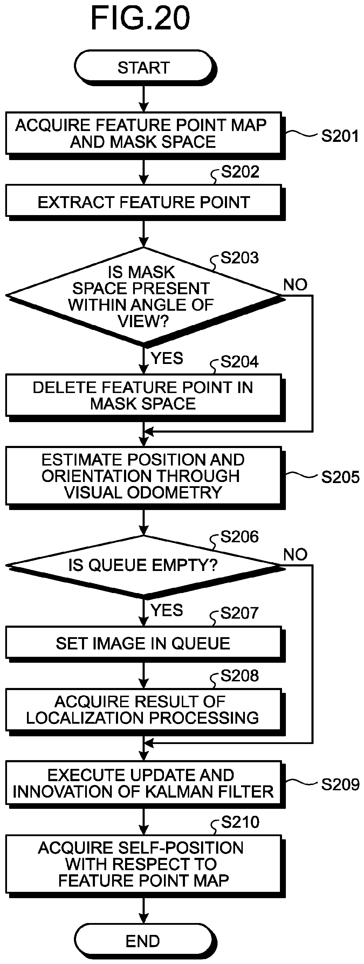

FIG. 20 is a flowchart illustrating an example of a flow of VO processing according to the embodiment of the present disclosure. The VO processing illustrated in FIG. 20 is repeatedly executed by the information processing apparatus 100 from the start of a game to the end of the game at a predetermined cycle. The predetermined cycle may be the same as the cycle (frame rate) in which the terminal apparatus 300 acquires the captured image.

The information processing apparatus 100 acquires the feature point map and the information regarding the mask space S from the storage unit 120 (Step S201). The information processing apparatus 100 extracts feature points from the captured image M acquired by the terminal apparatus 300 (Step S202).

The information processing apparatus 100 determines whether the mask space S is present within the angle of view of the terminal apparatus 300 (Step S203). The information processing apparatus 100 determines whether the mask space S is present within the angle of view based on the self-position (for example, the self-position estimated one frame before) of the terminal apparatus 300.

When the mask space S is not present within the angle of view (Step S203; No), the information processing apparatus 100 proceeds to Step S205. When the mask space S is present within the angle of view (Step S203; Yes), the information processing apparatus 100 deletes the feature point in the mask space S among the feature points extracted in Step S202 (Step S204).

The information processing apparatus 100 estimates the position and orientation of the terminal apparatus 300 as motion information using visual odometry (VO) (Step S205).

The information processing apparatus 100 determines whether the queue used for the localization processing is empty (Step S206). Here, the information processing apparatus 100 performs localization processing using the captured image M stored in the queue. Therefore, when the queue is empty, it means that the localization processing with the information processing apparatus 100 is finished, and when the queue is not empty, it means that the information processing apparatus 100 is executing the localization processing.

When the queue is not empty, that is, when the localization processing is being executed (Step S206; No), the information processing apparatus 100 proceeds to Step S209. When the queue is empty, that is, when the localization processing is finished (Step S206; Yes), the information processing apparatus 100 stores the captured image M in the queue (Step S207).

The information processing apparatus 100 acquires position and orientation information of the terminal apparatus 300 that is a result of the localization processing (Step S208).

The information processing apparatus 100 executes update and innovation of the Kalman filter by using at least either the position and orientation information or the motion information (Step S209), and acquires the self-position with respect to the feature point map (Step S210). The information processing apparatus 100 acquires the self-position of the terminal apparatus 300 in the map coordinate system.

### <3.2.2. Localization processing>

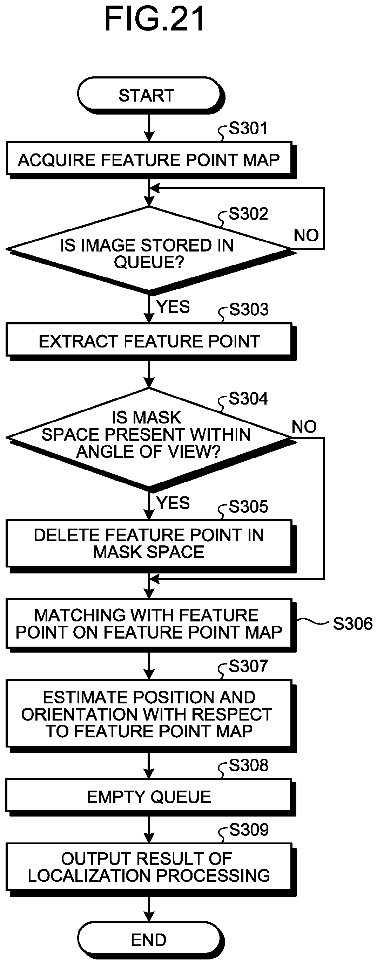

FIG. 21 is a flowchart illustrating an example of a flow of localization processing according to the embodiment of the present disclosure. The localization process illustrated in FIG. 21 is repeatedly executed by the information processing apparatus 100 from the start of a game to the end of the game. The localization processing takes several frames, for example.

The information processing apparatus 100 acquires a feature point map from the storage unit 120 (Step S301). The information processing apparatus 100 determines whether the captured image M is stored in the queue (Step S302). When the captured image M is not stored in the queue (Step S302; No), the information processing apparatus 100 returns to Step S302 and waits for the captured image M to be stored in the queue.

When the captured image M is stored in the queue (Step S302; Yes), the information processing apparatus 100 extracts feature points from the captured image M stored in the queue (Step S303).

The information processing apparatus 100 determines whether the mask space S is present within the angle of view of the terminal apparatus 300 (Step S304). The information processing apparatus 100 determines whether the mask space S is present within the angle of view based on the self-position of the terminal apparatus 300.

When the mask space S is not present within the angle of view (Step S304; No), the information processing apparatus 100 proceeds to Step S306. When the mask space S is present within the angle of view (Step S304; Yes), the information processing apparatus 100 deletes the feature point in the mask space S among the feature points extracted in Step S303 (Step S305).

The information processing apparatus 100 performs matching between the feature points registered in the feature point map and the feature points included in the captured image M (Step S306). The information processing apparatus 100 estimates the position and orientation of the terminal apparatus 300 with respect to the feature point map as the position and orientation information through localization (Step S307).

The information processing apparatus 100 deletes the captured image M stored in the queue used for the localization processing and empties the queue (Step S308). The information processing apparatus 100 outputs the position and orientation information estimated in Step S307 as a result of the localization processing (Step S309).

In this manner, the information processing apparatus 100 according to the embodiment of the present disclosure calculates the mask space S including the display apparatus 200 using the captured image M. The information processing apparatus 100 generates a feature point map and estimates the self-position of the terminal apparatus 300 using the calculated feature point corresponding to the space outside the mask space S among the feature points extracted from the captured image M.

This allows the information processing apparatus 100 to generate the feature point map and estimate the self-position of the terminal apparatus 300 with higher accuracy even when a moving image is displayed on the display apparatus 200.

Further, the information processing apparatus 100 detects the display apparatus 200 with respect to the captured image M at the time of executing map creation processing. The information processing apparatus 100 does not detect the display apparatus 200 itself with respect to the captured image M when executing the self-position estimation processing. The information processing apparatus 100 deletes the feature point corresponding to the display apparatus 200 in the self-position estimation processing using the mask space S created at the time of execution of the map creation processing.

This allows the information processing apparatus 100 to further reduce the processing load as compared with a case where the display apparatus 200 is detected in each frame at the time of execution of the self-position estimation processing.

### <<4. Modification>>

### <4.1. First modification>

In the above-described embodiment, the information processing apparatus 100 detects the display area 200R of the display apparatus 200, but the present invention is not limited to this configuration. For example, the information processing apparatus 100 may acquire information regarding the display area 200R from the user U. That is, the information processing apparatus 100 may receive manual input operation of the display area 200R from the user U.

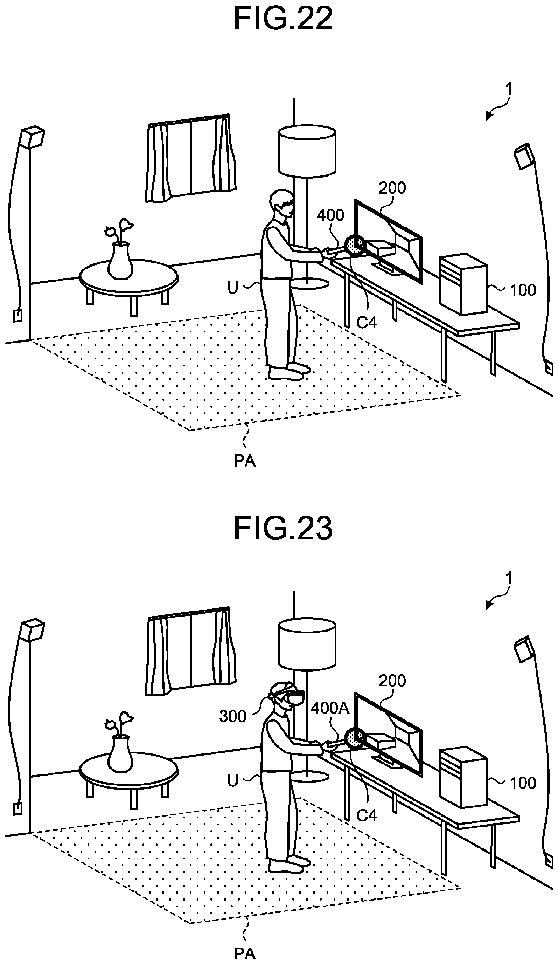

FIG. 22 is a diagram for describing an example of input of the display area 200R according to a first modification of the embodiment of the present disclosure.

As illustrated in FIG. 22, it is assumed that the user U is holding a controller 400. The controller 400 may have the same configuration as that of the terminal apparatus 300 illustrated in FIG. 4 except for the display unit 330. That is, the controller 400 may acquire information for the information processing apparatus 100 to estimate the position and orientation (self-position) of the controller 400. The information processing apparatus 100 estimates the self-position of the controller 400 using this information.

As illustrated in FIG. 22, the user U touches, for example, four corners of the display apparatus 200 with the controller 400. The information processing apparatus 100 detects the touch with the controller 400. The information processing apparatus 100 detects the places touched by the user U with the controller 400 as vertices (corners C1 to C4) of the display area 200R of the display apparatus 200.

In the example of FIG. 22, the user U touches the lower left corner of the display apparatus 200. Based on this operation by the user U, the information processing apparatus 100 detects the corner C4 of the display area 200R.

Here, the user U inputs the display area 200R using the actual controller 400, but the present invention is not limited to this configuration. For example, the user U may input the display area 200R using a virtual controller 400A.

FIG. 23 is a diagram for describing another example of input of the display area 200R according to the first modification of the embodiment of the present disclosure.

As illustrated in FIG. 23, the user U is holding the controller 400A. The controller 400A held by the user U is a virtual controller displayed on the display unit 330 of the terminal apparatus 300 by the information processing apparatus 100. For example, the information processing apparatus 100 superimposes the controller 400A on an image (captured image M) of the real space and presents the superimposed image to the user U.

The user U touches the four corners of the display apparatus 200 using the virtual controller 400A. This causes the information processing apparatus 100 to detect the display area 200R of the display apparatus 200.

In this manner, the information processing apparatus 100 can detect the display area 200R using the virtual controller 400A.

As illustrated in FIGS. 22 and 23, when the user U designates the display area 200R with the controller 400, there is a possibility that the user U goes out of the play area PA. For example, when the controller 400 is short, there is a possibility that the user U cannot designate the display area 200R unless the user U goes out of the play area PA. In particular, as illustrated in FIG. 23, when the user U wears an HMD (an example of the terminal apparatus 300) on the head, it is difficult for the user U to recognize the surrounding situation, and there is a possibility that the user U does not notice that the user U has gone out of the play area PA.

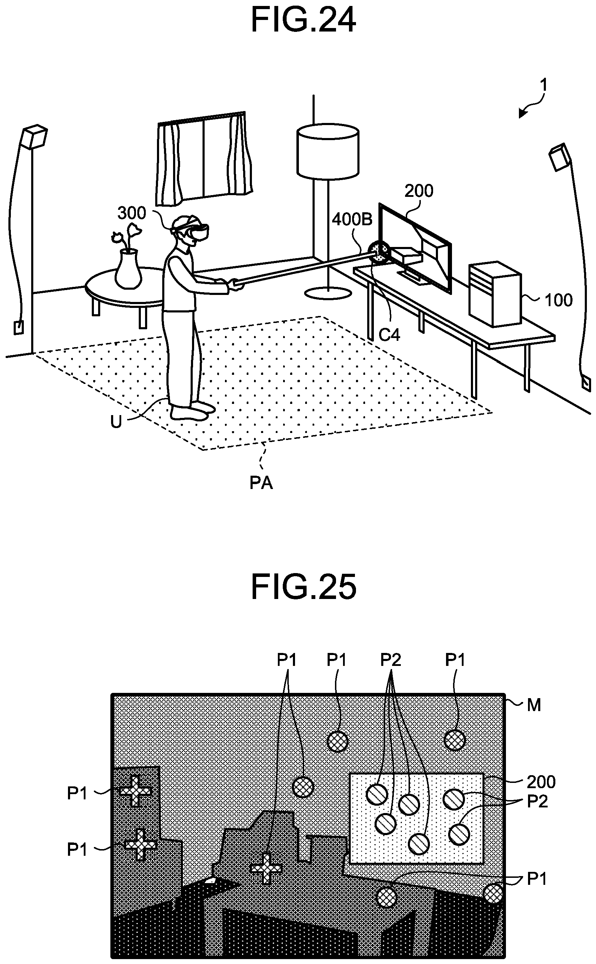

Thus, the information processing apparatus 100 may superimpose a rod-shaped controller as a virtual controller 400B on the captured image and present the superimposed image to the user U. FIG. 24 is a diagram for describing another example of input of the display area 200R according to the first modification of the embodiment of the present disclosure.

As illustrated in FIG. 24, the information processing apparatus 100 presents the rod-shaped virtual controller 400B to the user U. The user U touches the four corners of the display apparatus 200 using the rod-shaped virtual controller 400B. Since the user U can touch the corners with a tip of the rod-shaped virtual controller 400B, the user U can safely input the display area 200R without going out of the play area PA.

Although the information processing apparatus 100 displays the rod-shaped virtual controller 400B here, the present invention is not limited to this configuration. For example, a rod-shaped virtual object may be superimposed on the controller 400 and displayed. The user U operates the controller 400 to input the display area 200R by operating the rod-shaped virtual object.

Further, the user U may manually designate the display area 200R every time the information processing system 1 is installed or a game starts. Alternatively, when the information processing apparatus 100 fails to detect the display area 200R, to acquire the display plane, or to calculate the mask space S, the user U may manually designate the display area 200R.

### <4.2. Second modification>

When the proposed technology of the present disclosure is introduced into a product, for example, when the information processing system 1 of the above-described embodiment is used at home, a method described below as a second modification is considered as a method for reducing risks in the introduction.

For the information processing apparatus 100 of the above-described embodiment to remove the feature points included in the display area 200R of the display apparatus 200 with desired accuracy, it is desirable that the information processing apparatus 100 estimate the self-position of the terminal apparatus 300 in the map coordinate system with a certain degree of accuracy.

Thus, in the second modification according to the embodiment of the present disclosure, it is assumed that the information processing apparatus 100 also performs self-position estimation of the terminal apparatus 300 by a method different from the proposed technology of the present disclosure. For example, the information processing apparatus 100 performs self-position estimation with the proposed technology of the present disclosure while performing self-position estimation of the terminal apparatus 300 using another method. When the estimation accuracy of the self-position with the proposed technology of the present disclosure satisfies, for example, desired accuracy, the information processing apparatus 100 ends the self-position estimation by another method and proceeds to the self-position estimation with the proposed technology of the present disclosure.

This allows the information processing apparatus 100 to perform self-position estimation that satisfies desired accuracy.

### (Self-position estimation method)

First, an outline of a self-position estimation method performed by the information processing apparatus 100 in the present modification will be described. The information processing apparatus 100 estimates the self-position using at least one of a first to third methods.

### (First method)

The first method is a method in which the information processing apparatus 100 recognizes the display area 200R of the display apparatus 200 in each frame and performs self-position estimation without using the feature point of the display area 200R.

Reference document 1: "RDS-SLAM: Real-Time Dynamic SLAM Using Semantic Segmentation Methods", Internet <URL: https://arxiv.org/ftp/arxiv/papers/1809/1809.08379.pdf>" can be cited as a reference document related to the first method. As another reference document related to the first method, Reference Document 2: "DS-SLAM A Semantic Visual SLAM towards Dynamic Environments", Internet <URL: https://arxiv.org/ftp/arxiv/papepa/1809/1809.08379.pdf>" can be cited.

These reference documents disclose a method for performing self-position estimation and feature point map creation through visual odometry using Semantic Segmentation or the like, without using feature points extracted from a moving object such as a person.

FIG. 25 is a diagram for describing an example of the first method according to the second modification of the embodiment of the present disclosure. The information processing apparatus 100 executes object recognition processing on the captured image M and recognizes the display apparatus 200. The information processing apparatus 100 extracts the feature points P1 and P2 from the captured image M. The information processing apparatus 100 deletes the feature point P2 extracted from the display apparatus 200 recognized through the recognition processing among the extracted feature points P1 and P2, and estimates the self-position of the terminal apparatus 300. The information processing apparatus 100 executes this processing for each frame.

In this manner, the first method is a method of executing object recognition processing on the captured image M in each frame and classifying the feature point based on the recognition result. Thus, using the first method allows the information processing apparatus 100 to remove the feature point extracted from the moving object without depending on the estimation result of the self-position of the terminal apparatus 300 in the map coordinate system.

On the other hand, the first method, in which the object recognition processing for the captured image M is performed in each frame, has a disadvantage that a processing load is large.

### (Second method)

The second method (an example of second estimation processing) is a method using the proposed technology of the present disclosure. In the second method, the information processing apparatus 100 sets the mask space S in the map coordinate system based on the display area 200R of the display apparatus 200 in the captured image M at the time of map creation. The information processing apparatus 100 removes the feature point extracted from the moving image displayed on the display apparatus 200 using the mask space S at the time of self-position estimation.

In the second method, the information processing apparatus 100 performs recognition processing of the display apparatus 200 at the time of map creation, detects the display area 200R of the display apparatus 200, and sets the mask space S. The information processing apparatus 100 does not perform recognition processing of the display apparatus 200 at the time of self-position estimation. Thus, using the second method allows the information processing apparatus 100 to remove the feature point extracted from the moving image while preventing an increase in the processing load at the time of self-position estimation.

In the second method, as described above, it is desirable to estimate the self-position of the terminal apparatus 300 with predetermined accuracy in order to classify the feature point with desired accuracy.

### (Third method)

The third method (an example of first estimation processing) is a method in which the information processing apparatus 100 reduces the size of an area where a moving image is displayed in the display area 200R by forming a predetermined pattern image on at least a part of the display area 200R of the display apparatus 200. Reducing the size of the area in which the moving image is displayed like this allows the information processing apparatus 100 to reduce the number of feature points extracted from the moving image, and can prevent deterioration of the estimation accuracy of the self-position of the terminal apparatus 300.

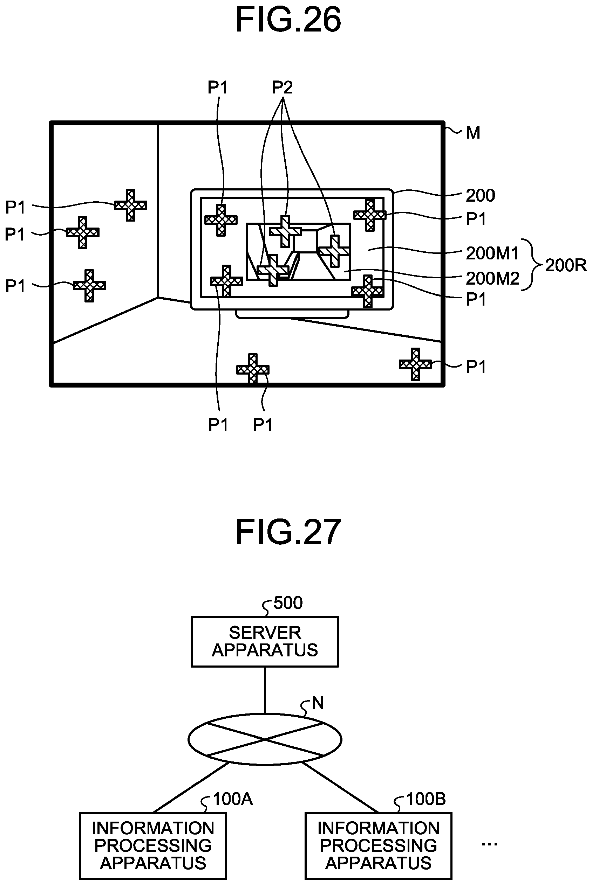

FIG. 26 is a diagram for describing an example of the third method according to the second modification of the embodiment of the present disclosure.

The information processing apparatus 100 displays a predetermined pattern image in a pattern display area 200M1 and displays a moving image in a moving image display area 200M2 in the display area 200R of the display apparatus 200. In the example of FIG. 26, the pattern display area 200M1 is a peripheral area of the display area 200R, and the moving image display area 200M2 is a central area of the display area 200R. That is, the pattern display area 200M1 is disposed around the moving image display area 200M2.

The pattern image is a still image of a fixed pattern. The moving image display area 200M2 in which a moving image is displayed is smaller than the display area 200R. When the information processing apparatus 100 extracts the feature points P1 and P2 from the captured image M including the display apparatus 200, the number of feature points P2 extracted from the moving image by the information processing apparatus 100 is reduced as compared with the case where the moving image is displayed in the entire display area 200R.

Thus, deterioration in estimation accuracy can be prevented to some extent even when the information processing apparatus 100 estimates the self-position of the terminal apparatus 300 using the feature points P1 and P2 extracted from the captured image M.

In the third method, the information processing apparatus 100 does not perform the recognition processing of the display apparatus 200 on the captured image M, and thus a processing load is small. In the third method, the number of feature points P2 extracted from the moving image is small, and thus the estimation accuracy is hardly affected by the deviation of the self-position with respect to the map coordinate system.

On the other hand, the third method, in which the pattern image is displayed on the display apparatus 200, and the moving image display area 200M2 is reduced, has a problem that information (for example, a play screen of a game) that can be displayed on the display apparatus 200 is limited.

Thus, in the present modification, as described above, it is assumed that the information processing apparatus 100 performs self-position estimation of the terminal apparatus 300 using the first or third method in addition to the second method.

For example, at the time of product introduction (for example, at the time of shipment), it is assumed that the information processing apparatus 100 is set to estimate the self-position of the terminal apparatus 300 using the third method. In addition, it is assumed that the information processing apparatus 100 is set to perform the self-position estimation of the terminal apparatus 300 using the second method simultaneously with the estimation using the third method from the time of shipment.

When the accuracy of the self-position estimation by the second method satisfies the desired accuracy, the information processing apparatus 100 switches the self-position estimation method from the third method to the second method.

For example, the information processing apparatus 100 according to the present modification switches the method used for self-position estimation based on an instruction from a server apparatus 500 disposed on the cloud.

### [Server apparatus 500]

FIG. 27 is a diagram for describing the server apparatus 500 according to the second modification of the embodiment of the present disclosure.

As illustrated in FIG. 27, the server apparatus 500 is connected to a plurality of information processing apparatuses 100A, 100B ··· via a network N. The server apparatus 500 is a control apparatus that controls the information processing apparatuses 100A, 100B, • • •. The server apparatus 500 acquires information including the execution result of the second method from each of the information processing apparatuses 100A, 100B •••.

The server apparatus 500 determines whether the information processing apparatus 100 shifts to the second method based on the acquired information. The server apparatus 500 notifies the information processing apparatus 100 of the determination result via the network N.

For example, the server apparatus 500 determines whether the accuracy of the self-position estimation satisfies the desired accuracy according to the extraction accuracy with which the information processing apparatus 100 extracts the feature point P2 from the display area 200R, and determines the shift to the second method based on the determination result.

The information processing apparatus 100 estimates the self-position of the terminal apparatus 300 using the method according to an instruction from the server apparatus 500. When receiving the instruction to shift to the second method from the server apparatus 500, the information processing apparatus 100 ends the display of the pattern image on the display apparatus 200.

In this manner, after shifting to the second method, the information processing apparatus 100 does not need to display the pattern image on the display apparatus 200, and can display information (for example, a play screen of a game) on the entire display area 200R of the display apparatus 200.

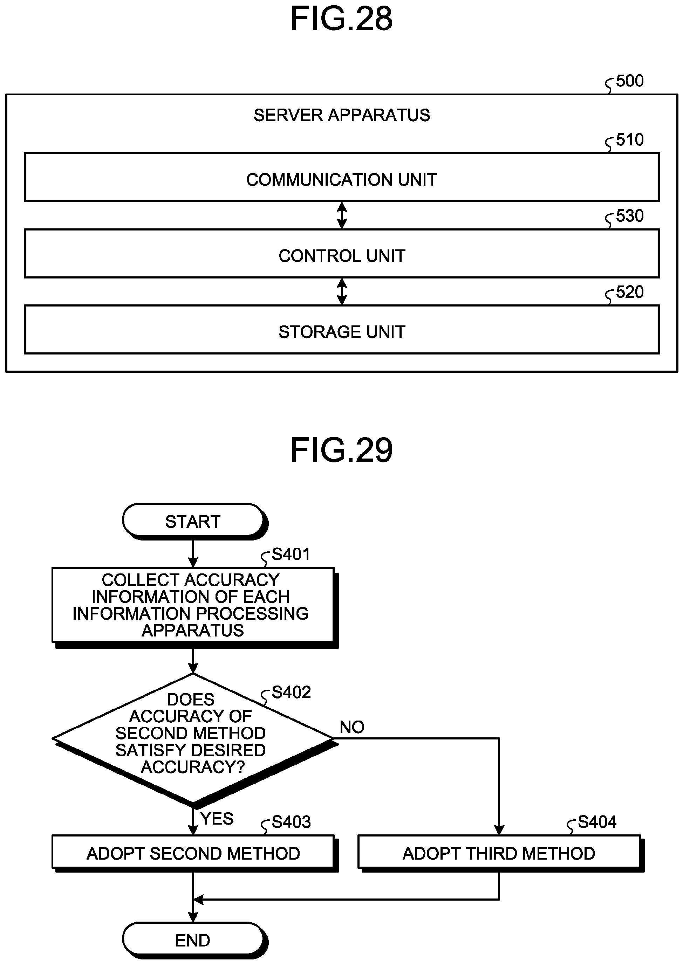

FIG. 28 is a block diagram illustrating a configuration example of the server apparatus 500 according to the second modification of the embodiment of the present disclosure. As illustrated in FIG. 28, the server apparatus 500 includes a communication unit 510, a storage unit 520, and a control unit 530.

The communication unit 510 exchanges information with another device. The communication unit 510 may communicate with the information processing apparatus 100 via the network N.

The storage unit 520 is realized by, for example, a semiconductor memory device such as a random access memory (RAM), a read only memory (ROM), or a flash memory, or a storage device such as a hard disk or an optical disk.

The control unit 530 integrally controls the operation of the server apparatus 500 using, for example, a CPU, a graphics processing unit (GPU), a RAM, and the like built in the server apparatus 500. For example, the control unit 530 is realized by a processor executing various programs stored in a storage device inside the server apparatus 500 using a random access memory (RAM) or the like as a work area. The control unit 530 may be realized by an integrated circuit such as an application specific integrated circuit (ASIC) or a field programmable gate array (FPGA). Any of the CPU, the MPU, the ASIC, and the FPGA can be regarded as a controller.

### (Determination processing with server apparatus 500)

FIG. 29 is a flowchart illustrating an example of a flow of determination processing according to the second modification of the embodiment of the present disclosure. The determination processing illustrated in FIG. 29 is periodically performed by the server apparatus 500, for example. Alternatively, the server apparatus 500 may perform the determination processing illustrated in FIG. 29 when accuracy information is received from the information processing apparatus 100.

As illustrated in FIG. 29, the server apparatus 500 collects accuracy information from each information processing apparatus 100 (Step S401). The accuracy information may include the accuracy related to the second method, for example, information related to the recognition accuracy of the two-dimensional display area using the mask space S. The accuracy information may also include information regarding the environment in which the second method is executed (for example, the brightness of the room, the size of the play area PA, the type of game, and the average moving speed of the user U) . Details of the recognition accuracy will be described later.

The server apparatus 500 determines whether the accuracy of the second method satisfies desired accuracy (Step S402). For example, the server apparatus 500 compares the above-described recognition accuracy with a threshold value, and determines that the desired accuracy is satisfied when the recognition accuracy is equal to or larger than the threshold value. Alternatively, the server apparatus 500 may perform determination using a recognizer that receives information included in the accuracy information as an input and outputs a determination result as to whether desired accuracy is satisfied. In this case, the recognizer may be generated by using, for example, machine learning using accuracy information acquired from a plurality of information processing apparatuses 100.

When the accuracy of the second method satisfies the desired accuracy (Step S402; Yes), the server apparatus 500 adopts the second method (Step S403). That is, the server apparatus 500 determines the shift from the third method to the second method.

When the accuracy of the second method does not satisfy the desired accuracy (Step S402; No), the server apparatus 500 adopts the third method (Step S404). That is, the server apparatus 500 determines continuation of the third method.

### (Method acquisition processing with information processing apparatus 100)

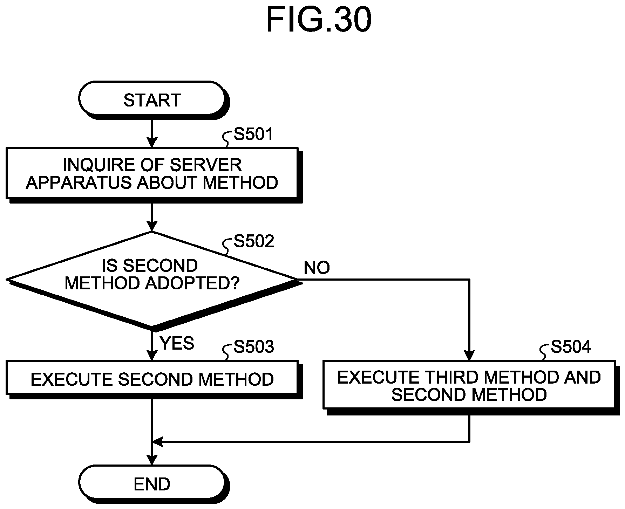

FIG. 30 is a flowchart illustrating an example of a flow of method acquisition processing according to the second modification of the embodiment of the present disclosure. The method acquisition processing illustrated in FIG. 30 is performed by the information processing apparatus 100, for example, when a game starts. Alternatively, the information processing apparatus 100 may perform the method acquisition processing at a predetermined cycle.

As illustrated in FIG. 30, the information processing apparatus 100 inquires of the server apparatus 500 about a method used for self-position estimation (Step S501). Next, as a result of the inquiry, the information processing apparatus 100 determines whether the server apparatus 500 has adopted the second method as the method to be used (Step S502).

When the second method is adopted (Step S502; Yes), the information processing apparatus 100 executes the second method (Step S503). That is, the information processing apparatus 100 estimates the self-position of the terminal apparatus 300 using the second method. More specifically, the information processing apparatus 100 executes the processing described with reference to FIGS. 19 to 21, for example.

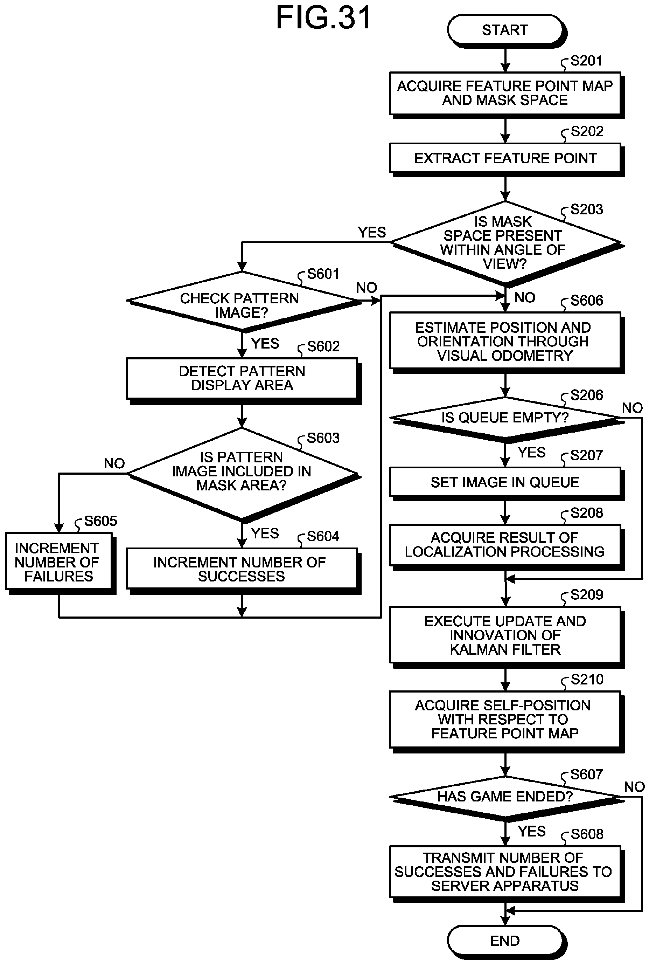

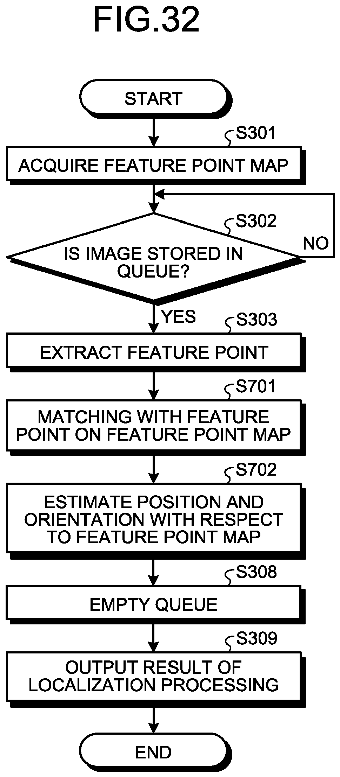

When the second method is not adopted and the third method is adopted (Step S502; No), the information processing apparatus 100 executes the third method and the second method (Step S504). That is, the information processing apparatus 100 executes the second method while estimating the self-position of the terminal apparatus 300 using the third method. More specifically, the information processing apparatus 100 executes, for example, the processing described with reference to FIGS. 19 to 21, and simultaneously executes the processing described with reference to FIGS. 31 and 32.

Hereinafter, a case where the information processing apparatus 100 performs the self-position estimation processing using both the third method and the second method will be described with reference to FIGS. 31 and 32. The information processing apparatus 100 may generate the feature point map used in the third method in the same manner as in the second method. Alternatively, the information processing apparatus 100 may perform the self-position estimation processing by the third method using the feature point map created by using the second method.

### (VO (visual odometry) processing with third method)

FIG. 31 is a flowchart illustrating an example of a flow of VO processing according to the second modification of the embodiment of the present disclosure. The VO processing of FIG. 31 is repeatedly executed by the information processing apparatus 100 from the start of a game to the end of the game at a predetermined cycle. The predetermined cycle may be the same as the cycle (frame rate) in which the terminal apparatus 300 acquires the captured image. The same processing as that in FIG. 20 is denoted by the same reference numeral, and description thereof is omitted.

When the information processing apparatus 100 determines that the mask space S is not present within the angle of view in Step S203 (Step S203; No), the process proceeds to Step S606. When the information processing apparatus 100 determines that the mask space S is present within the angle of view (Step S203; Yes), it is determined whether to check the pattern image (Step S601). The information processing apparatus 100 may check the pattern image at a predetermined cycle, for example, once in several frames.

When the pattern image is not checked (Step S601; No), the information processing apparatus 100 proceeds to Step S606. When the pattern image is checked (Step S601; Yes), the information processing apparatus 100 detects the pattern display area 200M1 (see FIG. 26) from the captured image M (Step S602). The information processing apparatus 100 detects the pattern display area 200M1 by detecting the pattern image from the captured image M.

As illustrated in FIG. 31, the information processing apparatus 100 determines whether the pattern image is included in the mask area S2 (see FIG. 16) (Step S603). The information processing apparatus 100 calculates the mask area S2 by projecting the mask space S onto the captured image M. The information processing apparatus 100 determines whether the pattern image is included in the calculated mask area S2.

As illustrated in FIG. 31, when the pattern image is included in the mask area S2 (Step S603; Yes), the information processing apparatus 100 increments the number of successes assuming that the calculation of the mask area S2 is successful (Step S604).

When the pattern image is not included in the mask area S2 (Step S603; No), the information processing apparatus 100 determines that the calculation of the mask area S2 has failed, and increments the number of failures (Step S605).

Next, the information processing apparatus 100 estimates the position and orientation through visual odometry (Step S606). The processing here is the same as the processing in Step S205 in FIG. 20 except that the information processing apparatus 100 estimates the position and orientation using all the feature points P1 and P2 extracted from the captured image M. In this manner, the information processing apparatus 100 estimates the position and orientation using the feature point P2 (see FIG. 26) extracted from the moving image too as the third method.

As illustrated in FIG. 31, the information processing apparatus 100 that has acquired the self-position with respect to the feature point map in Step S210 determines whether the game has ended (Step S607). When the game has not ended (Step S607; No), the information processing apparatus 100 ends the process.

When the game has ended (Step S607; Yes), the information processing apparatus 100 transmits the number of times of successful calculation of the mask area S2 and the number of times of failure to the server apparatus 500 as the recognition accuracy (Step S608). Further, in addition to the recognition accuracy, the information processing apparatus 100 may transmit environment information regarding the surrounding environment and the like to the server apparatus 500 as accuracy information.

Here, the information processing apparatus 100 transmits the number of times of successful calculation of the mask area S2 and the number of times of failure to the server apparatus 500, but the present invention is not limited to this configuration. For example, the information processing apparatus 100 may transmit the ratio of the number of times of success or the ratio of the number of times of failure to the server apparatus 500 as the recognition accuracy.

Alternatively, the information processing apparatus 100 may calculate the degree of the deviation between the mask area S2 and the pattern image as the recognition accuracy instead of the number of times of success and failure. For example, the information processing apparatus 100 may calculate the area of the pattern image that has come out of the mask area S2 and transmit the average value of the areas to the server apparatus 500 as the recognition accuracy.

In this manner, the information processing apparatus 100 can obtain the deletion accuracy of the feature point P2, in other words, the estimation accuracy of the self-position of the terminal apparatus 300 by obtaining the calculation accuracy of the mask area S2. This is because the calculation accuracy of the mask area S2 affects the accuracy of deleting the feature point P2 extracted from the display area 200R with the information processing apparatus 100. The accuracy of deleting the feature point P2 that may adversely affect the self-position estimation affects the self-position estimation accuracy of the terminal apparatus 300.

Thus, the information processing apparatus 100 notifies the server apparatus 500 of the calculation accuracy (recognition accuracy) of the mask area S2, and thus the server apparatus 500 can determine whether the estimation accuracy of the self-position by the second method satisfies the desired accuracy based on the recognition accuracy.

### (Localization processing by third method)

FIG. 32 is a flowchart illustrating an example of a flow of localization processing according to the second modification of the embodiment of the present disclosure. The localization processing of FIG. 32 is repeatedly executed by the information processing apparatus 100 from the start of a game to the end of the game. The localization processing takes several frames, for example. The same processing as that in FIG. 21 is denoted by the same reference numerals, and description thereof is omitted.

As illustrated in FIG. 32, the information processing apparatus 100 that has extracted the feature points P1 and P2 from the captured image M in Step S303 performs matching between the extracted feature points P1 and P2 and the feature points on the feature point map (Step S701). The information processing apparatus 100 estimates a position and orientation with respect to the feature point map (Step S702) .

The processing in Steps S701 and 702 is the same as the processing in Steps S306 and S307 in FIG. 21 except that the information processing apparatus 100 estimates the position and orientation using all the feature points P1 and P2 extracted from the captured image M. In this manner, the information processing apparatus 100 estimates the position and orientation using the feature point P2 (see FIG. 26) extracted from the moving image too as the third method.

In this manner, the information processing apparatus 100 according to the present modification first estimates the self-position of the terminal apparatus 300 using the first or third method in addition to the second method. When the accuracy of the self-position estimation by the second method satisfies the desired accuracy, the information processing apparatus 100 switches the self-position estimation method from the third method to the second method.

This allows the information processing apparatus 100 to estimate the self-position of the terminal apparatus 300 with accuracy that satisfies desired accuracy while preventing an increase in processing load.

Here, the information processing apparatus 100 estimates the self-position of the terminal apparatus 300 using the third method at the time of product introduction, but the present invention is not limited to this configuration. The information processing apparatus 100 may perform self-position estimation of the terminal apparatus 300 using the first method instead of the third method.

As described above, the processing load of the information processing apparatus 100 is high in the first method, but the estimation accuracy of the self-position is high. For example, when more accurate self-position estimation is required from the time of product introduction, the information processing apparatus 100 may use the first method instead of the third method. The information processing apparatus 100 estimates the self-position of the terminal apparatus 300 using the first method, and shifts from the first method to the second method when the estimation accuracy of the second method becomes equal to or greater than desired accuracy. This allows the information processing apparatus 100 to further reduce the increase in the processing load while performing the self-position estimation with higher accuracy.

### <<5. Other embodiments>>

The above-described embodiment and modifications are examples, and various modifications and applications are possible.

For example, at least some of the functions of the information processing apparatus 100 of the present embodiment may be realized by the terminal apparatus 300. For example, the terminal apparatus 300 may execute map generation processing or may execute self-position estimation processing of the terminal apparatus 300. The information processing apparatus 100 and the terminal apparatus 300 may separately perform each processing such that the information processing apparatus 100 performs the map generation processing and the terminal apparatus 300 performs the self-position estimation processing.

In the above-described embodiment, the information processing system 1 is, for example, a system that provides a game service to the user U, but the present invention is not limited to this configuration. For example, the information processing system 1 may be an automated driving system. In this case, for example, the terminal apparatus 300 is a moving object such as a vehicle or a drone, and the information processing apparatus 100 estimates the self-position of the moving object.

For example, a communication program for executing the above-described operation is stored and distributed in a computer-readable recording medium such as an optical disk, a semiconductor memory, a magnetic tape, or a flexible disk. Then, for example, the program is installed in a computer, and the above-described processing is executed to configure the control apparatus. At this time, the control apparatus may be an apparatus (for example, a personal computer) outside the information processing apparatus 100, the terminal apparatus 300, and the server apparatus 500. The control apparatus may be a device (for example, the control units 130, 350, and 530) inside the information processing apparatus 100, the terminal apparatus 300, and the server apparatus 500.

In addition, the communication program may be stored in a disk apparatus included in a server apparatus on a network such as the Internet so that the communication program can be downloaded to a computer. The above-described functions may be realized by cooperation of an operating system (OS) and application software. In this case, a portion other than the OS may be stored in a medium and distributed, or a portion other than the OS may be stored in a server apparatus and downloaded to a computer.

Among the processing described in the above embodiments, all or a part of the processing described as being performed automatically may be performed manually, or all or a part of the processing described as being performed manually may be performed automatically by a known method. In addition, the processing procedure, specific name, and information including various data and parameters illustrated in the documents and the drawings may be freely changed unless otherwise specified. For example, the various types of information illustrated in each figure are not limited to the illustrated information.

Each component of each apparatus illustrated in the drawings is functionally conceptual, and is not necessarily physically configured as illustrated in the drawings. That is, a specific form of distribution and integration of each apparatus is not limited to the illustrated form, and all or a part thereof may be functionally or physically distributed and integrated in any unit according to various loads, usage conditions, and the like. This configuration through distribution and integration may be performed dynamically.

In addition, the above-described embodiments may be appropriately combined in a region in which the processing contents do not contradict each other. The order of each step illustrated in the sequence diagram of the above-described embodiments may be changed as appropriate.

Further, for example, the present embodiment may be implemented as any configuration constituting an apparatus or a system, for example, a processor as a system large scale integration (LSI) or the like, a module using a plurality of processors or the like, a unit using a plurality of modules or the like, a set (that is, a configuration of a part of an apparatus) obtained by further adding other functions to a unit, or the like.

In the present embodiment, the system means a set of a plurality of components (apparatuses, modules (parts), and the like), and it does not matter whether all the components are in the same housing. Thus, a plurality of apparatuses housed in separate housings and connected via a network and one apparatus in which a plurality of modules are housed in one housing are both systems.

Further, for example, the present embodiment may adopt a configuration of cloud computing in which one function is shared and processed by a plurality of apparatuses in cooperation via a network.

### <<6. Hardware configuration>>

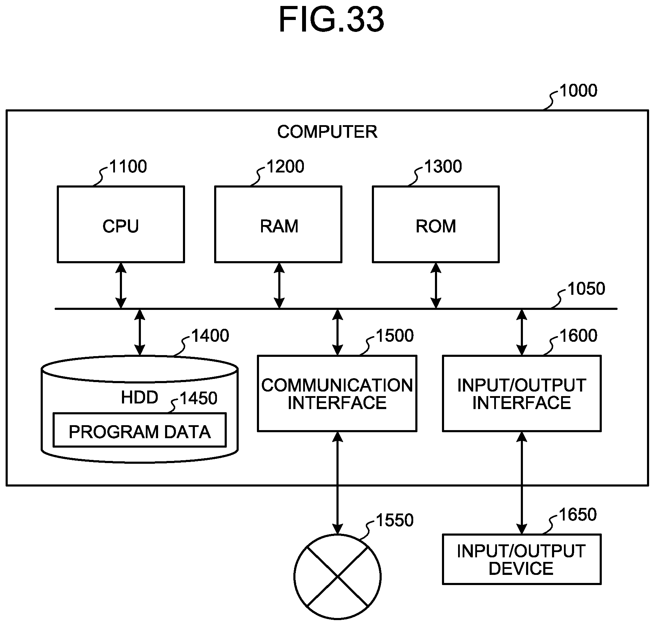

The information processing apparatus such as the information processing apparatus 100 according to each embodiment described above is realized by a computer 1000 having a configuration as illustrated in FIG. 33, for example. Hereinafter, the information processing apparatus 100 according to the embodiment of the present disclosure will be described as an example. FIG. 33 is a hardware configuration diagram illustrating an example of the computer 1000 that realizes functions of the information processing apparatus 100 according to the embodiment of the present disclosure. The computer 1000 includes a CPU 1100, a RAM 1200, a read only memory (ROM) 1300, a hard disk drive (HDD) 1400, a communication interface 1500, and an input/output interface 1600. Each unit of the computer 1000 is connected by a bus 1050.

The CPU 1100 operates based on a program stored in the ROM 1300 or the HDD 1400, and controls each unit. For example, the CPU 1100 develops a program stored in the ROM 1300 or the HDD 1400 in the RAM 1200, and executes processing corresponding to various programs.

The ROM 1300 stores a boot program such as a basic input output system (BIOS) executed by the CPU 1100 when the computer 1000 is activated, a program depending on hardware of the computer 1000, and the like.

The HDD 1400 is a computer-readable recording medium that non-transiently records a program executed by the CPU 1100, data used by the program, and the like. Specifically, the HDD 1400 is a recording medium that records a program for the information processing method according to the present disclosure that is an example of the program data 1450.

The communication interface 1500 is an interface for the computer 1000 to connect to an external network 1550 (for example, the Internet). For example, the CPU 1100 receives data from another device or transmits data generated by the CPU 1100 to another device via the communication interface 1500.

The input/output interface 1600 is an interface for connecting an input/output device 1650 and the computer 1000. For example, the CPU 1100 receives data from an input device such as a keyboard and a mouse via the input/output interface 1600. The CPU 1100 also transmits data to an output device such as a display, a speaker, or a printer via the input/output interface 1600. Further, the input/output interface 1600 may function as a media interface that reads a program or the like recorded on a predetermined computer-readable recording medium. The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, when the computer 1000 functions as the information processing apparatus 100 according to the embodiment of the present disclosure, the CPU 1100 of the computer 1000 realizes the functions of the control unit 130 and the like by executing a program loaded on the RAM 1200. The CPU 1100 reads the program data 1450 from the HDD 1400 and executes the program data. However, as another example, the information processing program may be acquired from another device via the external network 1550.

The information processing apparatus 100 according to the present embodiment may be applied to a system including a plurality of apparatuses on the premise of connection to a network (or communication between apparatuses), such as cloud computing, for example. That is, the information processing apparatus 100 according to the present embodiment described above may be realized as the information processing system 1 according to the present embodiment by a plurality of apparatuses, for example.

An example of the hardware configuration of the information processing apparatus 100 has been described above. Each of the above-described components may be configured by using a versatile member, or may be configured by hardware specialized for the function of each component. Such a configuration may be appropriately changed according to the technical level at the time of implementation.

### <<7. Conclusion>>

Although the above description is given regarding the embodiments of the present disclosure, the technical scope of the present disclosure is not limited to each of the above-described embodiments as it is, and various modifications can be made without departing from the scope of the present disclosure. In addition, the components in different embodiments and modifications may be appropriately combined.

The effects of each embodiment described in the present specification are merely examples and are not restrictive of the disclosure herein, and other effects may be achieved.

The present technology may also take the following configurations.
(1) An information processing apparatus comprising a control unit, the control unit:
   acquiring a display area of a display apparatus included in an image captured by an imaging apparatus;
   generating a three-dimensional mask area and a three-dimensional feature point map based on the display area that has been acquired; and
   estimating at least either a position or an orientation of the imaging apparatus using at least either the three-dimensional mask area or the three-dimensional feature point map and one or a plurality of feature points extracted from the image captured by the imaging apparatus.
(2) The information processing apparatus according to (1), wherein the control unit generates the three-dimensional feature point map based on a feature point among the feature points extracted from the image, the feature point not being included in the display area.
(3) The information processing apparatus according to (1) or (2), wherein the control unit sets a space including the display area in a three-dimensional space as the three-dimensional mask area.
(4) The information processing apparatus according to (3), wherein the control unit:
   calculates a display plane including the display area in the three-dimensional space from at least three of the feature points included in the display area of the image;
   calculates the display area in the display plane based on an intersection of the display plane and a vector from the imaging apparatus toward a corner of the display area of the image; and
   sets an area in which the display area is expanded in three directions as the three-dimensional mask area.
(5) The information processing apparatus according to any one of (1) to (4), wherein the control unit estimates at least either the position or the orientation of the imaging apparatus based on a feature point among the plurality of feature points extracted from the image, the feature point corresponding to an area outside the three-dimensional mask area.
(6) The information processing apparatus according to (5), wherein the control unit:
   calculates a two-dimensional mask area corresponding to the three-dimensional mask area in the image captured by the imaging apparatus based on at least either the position or the orientation of the imaging apparatus and the three-dimensional mask area; and
   estimates at least either the position or the orientation of the imaging apparatus based on a feature point among the feature points, the feature point being outside the two-dimensional mask area in the image.
(7) The information processing apparatus according to any one of (1) to (6), wherein the control unit acquires the display area by detecting a predetermined image displayed on a display.
(8) The information processing apparatus according to any one of (1) to (6), wherein the control unit receives designation of the display area from a user.
(9) The information processing apparatus according to any one of (1) to (8), wherein
   the control unit:
   displays a predetermined pattern image in a first area of the display area; and
   estimates at least either the position or the orientation of the imaging apparatus based on the plurality of feature points extracted from the image captured by the imaging apparatus.
(10) The information processing apparatus according to (9), wherein the control unit executes, based on an instruction from a control apparatus, at least one of first estimation processing of displaying the predetermined pattern image and estimating at least either the position or the orientation of the imaging apparatus based on the plurality of feature points extracted from the image captured by the imaging apparatus, and second estimation processing of estimating at least either the position or the orientation of the imaging apparatus using at least either the three-dimensional mask area or the three-dimensional feature point map and the feature points extracted from the image captured by the imaging apparatus.
(11) The information processing apparatus according to (10), wherein the control unit:
   calculates a two-dimensional mask area corresponding to the three-dimensional mask area in the image captured by the imaging apparatus based on at least either the position or the orientation of the imaging apparatus and the three-dimensional mask area;
   detects the predetermined pattern image displayed in the display area; and
   notifies the control apparatus of a determination result obtained by determining whether the predetermined pattern image is included in the two-dimensional mask area.
(12) The information processing apparatus according to (11), wherein the control apparatus determines estimation processing to be executed by the control unit among the first estimation processing and the second estimation processing according to the determination result, and notifies the control unit of a determination result.
(13) The information processing apparatus according to any one of (1) to (12), wherein the imaging apparatus is mounted on a device worn on a head of a user.
(14) An information processing method comprising:
   acquiring a display area of a display apparatus included in an image captured by an imaging apparatus;
   generating a three-dimensional mask area and a three-dimensional feature point map based on the display area that has been acquired; and
   estimating at least either a position or an orientation of the imaging apparatus using at least either the three-dimensional mask area or the three-dimensional feature point map and one or a plurality of feature points extracted from the image captured by the imaging apparatus.
(15) A program causing a computer to:
   acquire a display area of a display apparatus included in an image captured by an imaging apparatus;
   generate a three-dimensional mask area and a three-dimensional feature point map based on the display area that has been acquired; and
   estimate at least either a position or an orientation of the imaging apparatus using at least either the three-dimensional mask area or the three-dimensional feature point map and one or a plurality of feature points extracted from the image captured by the imaging apparatus.

### Reference Signs List

1 INFORMATION PROCESSING SYSTEM
100 INFORMATION PROCESSING APPARATUS
110, 310, 510 COMMUNICATION UNIT
120, 520 STORAGE UNIT
130, 350, 530 CONTROL UNIT
131 MAP GENERATION UNIT
132 SELF-POSITION ESTIMATION UNIT
200 DISPLAY APPARATUS
220, 320 SENSOR UNIT
300 TERMINAL APPARATUS
330 DISPLAY UNIT
340 INPUT UNIT
400 CONTROLLER
500 SERVER APPARATUS

## Claims

1. An information processing apparatus comprising a control unit,
the control unit:
acquiring a display area of a display apparatus included in an image captured by an imaging apparatus;
generating a three-dimensional mask area and a three-dimensional feature point map based on the display area that has been acquired; and
estimating at least either a position or an orientation of the imaging apparatus using at least either the three-dimensional mask area or the three-dimensional feature point map and one or a plurality of feature points extracted from the image captured by the imaging apparatus.

2. The information processing apparatus according to claim 1, wherein the control unit generates the three-dimensional feature point map based on a feature point among the feature points extracted from the image, the feature point not being included in the display area.

3. The information processing apparatus according to claim 1, wherein the control unit sets a space including the display area in a three-dimensional space as the three-dimensional mask area.

4. The information processing apparatus according to claim 3, wherein
the control unit:
calculates a display plane including the display area in the three-dimensional space from at least three of the feature points included in the display area of the image;
calculates the display area in the display plane based on an intersection of the display plane and a vector from the imaging apparatus toward a corner of the display area of the image; and
sets an area in which the display area is expanded in three directions as the three-dimensional mask area.

5. The information processing apparatus according to claim 1, wherein the control unit estimates at least either the position or the orientation of the imaging apparatus based on a feature point among the plurality of feature points extracted from the image, the feature point corresponding to an area outside the three-dimensional mask area.

6. The information processing apparatus according to claim 5, wherein
the control unit:
calculates a two-dimensional mask area corresponding to the three-dimensional mask area in the image captured by the imaging apparatus based on at least either the position or the orientation of the imaging apparatus and the three-dimensional mask area; and
estimates at least either the position or the orientation of the imaging apparatus based on a feature point among the feature points, the feature point being outside the two-dimensional mask area in the image.

7. The information processing apparatus according to claim 1, wherein the control unit acquires the display area by detecting a predetermined image displayed on a display.

8. The information processing apparatus according to claim 1, wherein the control unit receives designation of the display area from a user.

9. The information processing apparatus according to claim 1, wherein
the control unit:
displays a predetermined pattern image in a first area of the display area; and
estimates at least either the position or the orientation of the imaging apparatus based on the plurality of feature points extracted from the image captured by the imaging apparatus.

10. The information processing apparatus according to claim 9, wherein the control unit executes, based on an instruction from a control apparatus, at least one of first estimation processing of displaying the predetermined pattern image and estimating at least either the position or the orientation of the imaging apparatus based on the plurality of feature points extracted from the image captured by the imaging apparatus, and second estimation processing of estimating at least either the position or the orientation of the imaging apparatus using at least either the three-dimensional mask area or the three-dimensional feature point map and the feature points extracted from the image captured by the imaging apparatus.

11. The information processing apparatus according to claim 10, wherein
the control unit:
calculates a two-dimensional mask area corresponding to the three-dimensional mask area in the image captured by the imaging apparatus based on at least either the position or the orientation of the imaging apparatus and the three-dimensional mask area;
detects the predetermined pattern image displayed in the display area; and
notifies the control apparatus of a determination result obtained by determining whether the predetermined pattern image is included in the two-dimensional mask area.

12. The information processing apparatus according to claim 11, wherein the control apparatus determines estimation processing to be executed by the control unit among the first estimation processing and the second estimation processing according to the determination result, and notifies the control unit of a determination result.

13. The information processing apparatus according to claim 1, wherein the imaging apparatus is mounted on a device worn on a head of a user.

14. An information processing method comprising:
acquiring a display area of a display apparatus included in an image captured by an imaging apparatus;
generating a three-dimensional mask area and a three-dimensional feature point map based on the display area that has been acquired; and
estimating at least either a position or an orientation of the imaging apparatus using at least either the three-dimensional mask area or the three-dimensional feature point map and one or a plurality of feature points extracted from the image captured by the imaging apparatus.

15. A program causing a computer to:
acquire a display area of a display apparatus included in an image captured by an imaging apparatus;
generate a three-dimensional mask area and a three-dimensional feature point map based on the display area that has been acquired; and
estimate at least either a position or an orientation of the imaging apparatus using at least either the three-dimensional mask area or the three-dimensional feature point map and one or a plurality of feature points extracted from the image captured by the imaging apparatus.
